(19) Europäisches Patentamt
European Patent Office
Office européen des brevets

(11) **EP 2 674 210 A1**

(12) **EUROPEAN PATENT APPLICATION**
published in accordance with Art. 153(4) EPC

(43) Date of publication:
**18.12.2013 Bulletin 2013/51**

(51) Int Cl.:
**B01D 65/02** (2006.01)          **B01D 69/08** (2006.01)

(21) Application number: **12744275.4**

(22) Date of filing: **07.02.2012**

(86) International application number:
**PCT/JP2012/052740**

(87) International publication number:
**WO 2012/108429 (16.08.2012 Gazette 2012/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.02.2011 JP 2011024028**

(71) Applicant: **Mitsubishi Rayon Co., Ltd.
Tokyo 100-8253 (JP)**

(72) Inventors:
• **KURASHINA Masaki
Otake-shi, Hiroshima 739-0693 (JP)**
• **SUMI Toshinori
Otake-shi, Hiroshima 739-0693 (JP)**
• **FUJIKI Hiroyuki
Otake-shi, Hiroshima 739-0693 (JP)**
• **HIROMOTO Yasuo
Otake-shi, Hiroshima 739-0693 (JP)**

(74) Representative: **HOFFMANN EITLE
Patent- und Rechtsanwälte
Arabellastrasse 4
81925 München (DE)**

(54) **WASHING DEVICE FOR POROUS HOLLOW FIBER MEMBRANES, AND POROUS HOLLOW FIBER MEMBRANE PRODUCTION METHOD**

(57)    The invention relates to a washing device for a porous hollow fiber membrane, including: n (n is an integer of 2 or greater) washing tanks that contain a washing liquid, through which the porous hollow fiber membrane sequentially passes; and at least one pressure applying unit that pressurizes or de-pressurizes the washing liquid on the outer side of the porous hollow fiber membrane immersed in the washing liquid to force the washing liquid to pass through a membrane part of the porous hollow fiber membrane, in which the pressure applying unit is accommodated in at least one of the first to (n-1)-th washing tanks. According to the invention, it is possible to provide a porous hollow fiber membrane production method that is capable of reducing the concentration of residual substances in membrane retained water and preventing reattachment of a hydrophilic polymer while suppressing the usage amount of a washing liquid, and a washing device for a porous hollow fiber membrane that is suitably used in the production method.

FIG. 1

**Description**

Technical Field

The present invention relates to a washing device for porous hollow fiber membranes and a porous hollow fiber membrane production method.
Priority is claimed on Japanese Patent Application No. 2011-24028, filed February 7, 2011, the content of which is incorporated herein by reference.

Background Art

In concentration and recovery of useful components, removal of unnecessary components, fresh water generation or the like in the field of the food industry, the medical industry, the electronic industry or the like, a porous hollow fiber membrane that is made of cellulose acetate, polyacrylonitrile, polysulfone, fluorine-based resin or the like and includes a hollow porous layer manufactured by wet spinning or dry-wet spinning, for example, has been widely used for a micro filtration membrane, an ultra filtration membrane, a reverse osmosis filtration membrane or the like.
In a case where the porous hollow fiber membrane is manufactured by the wet spinning or dry-wet spinning, first, a membrane forming dope where a hydrophobic polymer and a hydrophilic polymer are dissolved in a solvent is prepared. Here, the hydrophilic polymer is added to adjust the viscosity of the membrane forming dope in a range that is suitable for formation of the porous hollow fiber membrane and to stabilize a membrane formation state. In many cases, polyethylene glycol, polyvinylpyrrolidone or the like is used as the hydrophilic polymer. Further, as the solvent, for example, N-dimethylacetamide (DMAc), N,N-dimethylformamide (DMF) or the like that is capable of dissolving the hydrophobic polymer and the hydrophilic polymer and is soluble in water may be used.
Then, the porous hollow fiber membrane is obtained by a coagulation process of ejecting the membrane forming dope in an annular form and coagulating the ejected dope in a coagulating liquid. Here, the membrane forming dope may be introduced into the coagulating liquid through an idle running section that is in contact with air (dry-wet spinning), or may be directly introduced into the coagulating liquid (wet spinning).
However, in general, a large amount of solvent or hydrophilic polymer remains in a state of solution in a porous part of the porous hollow fiber membrane at a time point when the coagulation ends. Here, if the solvent remains, the porous part is in a swollen state, to thereby reduce the mechanical strength. Further, if the hydrophilic polymer remains, water permeability that is one of important performances necessary for the porous hollow fiber membrane becomes insufficient.
For this reason, a process of removing the solvent or the hydrophilic polymer that remains in this manner from the porous hollow fiber membrane is necessary after the coagulation process.
Accordingly, a method of removing a residual hydrophilic polymer from a porous hollow fiber membrane has been proposed.
For example, PTL 1 discloses a washing method of a porous hollow fiber membrane that is capable of removing a hydrophilic polymer that remains in the porous hollow fiber membrane at low cost or in a short time, the method including a process of de-pressurizing the outer side of the porous hollow fiber membrane by a de-pressurization washing unit to discharge a hydrophilic polymer aqueous solution in the membrane to the outer side of the porous hollow fiber membrane; pressurizing the outer side of the porous hollow fiber membrane by a pressurization washing unit that is provided at a subsequent stage to push in washing water through a membrane surface; pressing the washing water into a membrane hollow part while substituting and diluting the hydrophilic polymer aqueous solution in the membrane; and de-pressurizing the outer side of the porous hollow fiber membrane by a de-pressurization washing unit that is provided at a subsequent stage to discharge the hydrophilic polymer aqueous solution to the outer side of the porous hollow fiber membrane. In a case where even a little flow capacity appears in the porous hollow fiber membrane after a coagulation process, this method is also effective to remove a residual solvent in the membrane.
In PTL 1, the de-pressurization washing unit, the pressurization washing unit and the de-pressurization washing unit are accommodated in the same washing tank, and supply and discharge paths of the washing liquid with respect to the de-pressurization washing units and the pressurization washing unit are not particularly disclosed.
In the case of such a configuration, in order to uniformly maintain the quality of the washing liquid in the washing tank, the following methods may be considered, for example.

(1) A method of circulating the washing liquid in the tank by a pump or the like to supply a predetermined amount of a clean washing liquid per time period into the washing tank and to overflow and discharge the washing liquid in the washing tank corresponding to the supplied amount from the washing tank, in both of the de-pressurization washing units and the pressurization washing unit.
(2) A method of discharging the draining washing water to the outside of the washing tank while suctioning the washing liquid in the washing tank in the de-pressurization washing units, discharging the draining washing water into the washing tank while supplying a clean washing liquid to the pressurization washing unit, and supplying clean washing water of an amount larger than the amount of the washing liquid discharged to the outside of the washing tank from the de-pressurization washing units to the pressurization washing unit to overflow and discharge the washing liquid corresponding to the difference from the washing tank.

(3) A method of discharging, while circulating the washing liquid in the washing tank by a pump or the like in the de-pressurization washing units and supplying a clean washing liquid to the pressurization washing unit, the draining washing water into the washing tank, and overflowing and discharging the washing liquid corresponding to the clean washing liquid supplied to the pressurization washing unit from the washing tank.

However, the porous hollow fiber membrane after washing retains approximately the same moisture as before washing unless dehydration is particularly performed. If the concentration of residual substances (hydrophilic polymer, decomposed materials thereof, or the like) in the membrane retained moisture is high, the substances that remain in an aqueous solution state in water retained in the membrane move to a membrane surface layer that is a moisture evaporation surface according to a capillary phenomenon and are concentrated due to moisture evaporation, in a membrane  drying process after washing. Here, non-volatile substances are solidified, and thus, a structure in the vicinity of the membrane surface may be damaged due to the solidified components.

Thus, it is necessary to reduce the concentration of residual substances in the membrane retained water that may cause such membrane damage as much as possible.

Citation List

Patent Literature

[PTL 1] Japanese Unexamined Patent Application, First Publication No. 2008-161755

Summary of Invention

Technical Problem

However, in the case of the above-mentioned method (1), the hydrophilic polymer or the like removed from the inside of the membrane in the de-pressurization washing units and the pressurization washing unit is dispersed in the washing liquid in the washing tank to contaminate the washing liquid. Thus, the hydrophilic polymer (including decomposed materials thereof) removed from the inside of the membrane may be again returned to the inside of the membrane through the washing liquid, and thus, the concentration of residual substances in the membrane retained water is easily increased. In addition, the hydrophilic polymer may also be reattached to the membrane surface, and if the drying is performed in this state, the membrane structure may be damaged. In order to decrease the concentration of residual substances in the membrane retained  water or to prevent reattachment of the hydrophilic polymer or the like, it is necessary to constantly supply a large amount of clean washing liquid to the washing tank.

Further, in the case of the above-mentioned method (2) or (3), it is easy to decrease the concentration of residual substances in the membrane retained water compared with the method (1), but the concentration is not necessarily decreased to a satisfactory level. In addition, in order to generate the water pressure necessary for washing in the pressurization washing unit provided in the same washing tank as in the de-pressurization washing units, a large amount of clean washing liquid is necessary.

In order to solve the above problems, an object of the invention is to provide a porous hollow fiber membrane production method that is capable of decreasing the concentration of residual substances in membrane retained water while suppressing the used amount of a washing liquid and preventing reattachment of a hydrophilic polymer, and a washing device for a porous hollow fiber membrane that is suitably used in the production method.

Solution to Problem

According to an aspect of the invention, there is provided a porous hollow fiber membrane production method including: a coagulation process of coagulating a membrane forming dope that includes a hydrophobic polymer and a hydrophilic polymer in a coagulating liquid to form a porous hollow fiber membrane; and a hydrophilic polymer removal process of washing the porous hollow fiber membrane to remove the hydrophilic polymer that remains in the porous hollow fiber membrane, in which with respect to the porous hollow fiber membrane that sequentially passes through the insides  of n (n is an integer of 2 or greater) washing tanks that contain a washing liquid, the hydrophilic polymer removal process includes a de-pressurization washing process of de-pressurizing the washing liquid on the outer side of the porous hollow fiber membrane to force the washing liquid to pass from the inner side of the porous hollow fiber membrane to the outer side thereof and a pressurization washing process of pressurizing the washing liquid on the outer side of the porous hollow fiber membrane to supply the washing liquid to the inner side of the porous hollow fiber membrane from the outer side thereof, in which the de-pressurization washing process and the pressurization washing process are performed $m_2$ ($m_2$ is an integer of 3 or greater) times in all, in which at least the first and $m_2$-th processes are the de-pressurization washing processes, in which the pressurization washing process is performed for the porous hollow fiber membrane that passes through any one of at least the first to (n-1)-th washing tanks, and in which the washing liquid is supplied to the n-th washing tank.

Here, it is preferable that the pressurization washing process also be performed for the porous hollow fiber membrane that passes through the n-th washing tank.

Further, according to another aspect of the invention, there is provided a washing device for a porous hollow fiber membrane that washes the porous hollow fiber membrane obtained by coagulating a membrane forming dope that includes a hydrophobic polymer and a hydrophilic polymer in a coagulating liquid to remove the hydrophilic polymer that remains in the porous hollow fiber membrane, including: n (n is an integer of 2 or greater) washing tanks that contain a washing liquid, through which the porous hollow fiber membrane sequentially passes; two or more de-pressurization washing units that de-pressurize the washing liquid on the outer side of the porous hollow fiber membrane immersed in the washing liquid to force the washing liquid to pass from the inner side of the porous hollow fiber membrane to the outer side thereof; at least one pressurization washing unit that pressurizes the washing liquid on the outer side of the porous hollow fiber membrane immersed in the washing liquid to supply the washing liquid to the inner side of the porous hollow fiber membrane from the outer side thereof; and supply means of supplying the washing liquid to the n-th washing tank, in which the de-pressurization washing units and the pressurization washing unit are arranged in series, in which the de-pressurization washing units are disposed at opposite ends of this arrangement, in which the de-pressurization washing units and the pressurization washing unit are accommodated in at least one of the n washing tanks, and in which the pressurization washing unit is accommodated in at least one of the first to (n-1)-th washing tanks.

Here, it is preferable that the pressurization washing unit be also accommodated in the n-th washing tank

That is, the invention relates to the following configurations.

(1) A washing device for a porous hollow fiber membrane, including: n (n is an integer of 2 or greater) washing tanks that contain a washing liquid, through which the porous hollow fiber membrane sequentially passes; and at least one pressure applying unit that pressurizes or de-pressurizes the washing liquid on the outer side of the porous hollow fiber membrane immersed in the washing liquid to force the washing liquid to pass through a membrane part of the porous hollow fiber membrane, in which the pressure applying unit is accommodated in at least one of the first to (n-1)-th washing tanks.

(2) The washing device for the porous hollow fiber membrane according to (1), in which the pressure applying unit includes: two or more de-pressurization washing units that de-pressurize the washing liquid on the outer side of the porous hollow fiber membrane immersed in the washing liquid to force the washing liquid to pass from the inner side of the porous hollow fiber membrane to the outer side thereof, and at least one pressurization washing unit that pressurizes the washing liquid on the outer side of the porous hollow fiber membrane immersed in the washing liquid to supply the washing liquid to the inner side of the porous hollow fiber membrane from the outer side thereof, in which the de-pressurization washing units and the pressurization washing unit are arranged in series, and in which the pressurization washing unit is accommodated in at least one of the first to (n-1)-th washing tanks.

(3) The washing device for the porous hollow fiber membrane according to (1) or (2), further including: supply means used to supply the washing liquid to at least one of the second to n-th washing tanks.

(4) The washing device for the porous hollow fiber membrane according to any one of (1) to (3), in which the pressurization washing unit is further accommodated in the n-th washing tank.

(5) The washing device for the porous hollow fiber membrane according to any one of (1) to (4), in which the de-pressurization washing units are disposed at opposite ends of an arrangement that includes the de-pressurization washing units and the pressurization washing unit.

(6) The washing device for the porous hollow fiber membrane according to any one of (2) to (5), in which a pressure range of the pressurization washing unit is 0.01 MPa or greater and smaller than 1 MPa.

(7) The washing device for the porous hollow fiber membrane according to any one of (2) to (6), in which a pressure range of the de-pressurization washing units is -0.1 MPa or greater and smaller than 0 MPa.

(8) A porous hollow fiber membrane production method including: a coagulation process of coagulating a membrane forming dope that includes a hydrophobic polymer and a hydrophilic polymer in a coagulating liquid to form a porous hollow fiber membrane; and a hydrophilic polymer removal process of washing the porous hollow fiber membrane to remove the hydrophilic polymer that remains in the porous hollow fiber membrane, in which the hydrophilic polymer removal process includes at least one pressure washing process of pressurizing or de-pressurizing, with respect to the porous hollow fiber membrane that sequentially passes through the insides of n (n is an integer of 2 or greater) washing tanks that contain a washing liquid, the washing liquid on the outer side of the porous hollow fiber membrane to force the washing liquid to pass through a stem of the porous hollow fiber membrane, in which the pressure washing process is performed $m_1$ ($m_1$ is an integer of 1 or greater) times in all, and in which the pressure washing process is performed for the porous hollow fiber membrane that passes through at least one of at least the first to (n-1)-th washing tanks.

(9) The porous hollow fiber membrane production method according to (8), in which the pressure washing process includes: a de-pressurization washing process of de-pressurizing the washing liquid on the outer side of the porous hollow fiber membrane to force the washing liquid to pass from the inner side of the porous hollow fiber membrane to the outer side thereof, with respect to the porous hollow fiber membrane that sequentially passes through the insides of the n (n is an integer of 2 or greater) washing tanks that contain the washing liquid, and a pressurization washing process of pressurizing the washing liquid on the outer side of the porous hollow fiber membrane to supply the washing liquid to the inner side of the porous hollow fiber membrane from the outer side thereof, in which the de-pressurization washing process and the pressurization washing process are performed $m_2$ ($m_2$ is an integer of 3 or greater) times in all, and in which the pressurization washing process is performed for the porous hollow fiber membrane that passes through at least one of at least the first to (n-1)-th washing tanks.

(10) The porous hollow fiber membrane production method according to (8) or (9), further including: supplying the washing liquid to at least one of the second to n-th washing tanks.

(11) The porous hollow fiber membrane production method according to any one of (8) to (10), further including: performing the pressurization washing process for the porous hollow fiber membrane that passes through the n-th washing tank.

(12) The porous hollow fiber membrane production method according to any one of (8) to (11), in which at least the first and $m_2$-th processes are the de-pressurization washing processes.

(13) The porous hollow fiber membrane production method according to any one of (8) to (12), in which the pressurization washing process includes pressurizing in a pressure range that is 0.01 MPa or greater and smaller than 1 MPa.

(14) The porous hollow fiber membrane production method according to any one of (8) to (13), in which the de-pressurization washing process includes de-pressurizing in a pressure range that is -0.1 MPa or greater and smaller than 0 MPa. Advantageous Effects of Invention

According to the invention, it is possible to provide a porous hollow fiber membrane production method that is capable of reducing the concentration of residual substances in membrane retained water and preventing reattachment of a hydrophilic polymer while suppressing the usage amount of a washing liquid, and a washing device for a porous hollow fiber membrane that is suitably used in the production method.

Brief Description of Drawings

FIG. 1 is a front view schematically illustrating an example of a washing device for porous hollow fiber membranes according to the invention.

FIG. 2 is a perspective view of a flow passage member in a first de-pressurization washing unit in FIG. 1.

FIG. 3 is a front view schematically illustrating another example of a washing device for porous hollow fiber membranes according to the invention.

FIG. 4 is a front view schematically illustrating still another example of a washing device for porous hollow fiber membranes according to the invention.

FIG. 5 is a front view schematically illustrating still another example of a washing device for porous hollow fiber membranes according to the invention.

FIG. 6 is a front view schematically illustrating still another example of a washing device for porous hollow fiber membranes according to the invention.

FIG. 7 is a graph illustrating the relationship between a washing liquid dilution ratio (V/M) and a membrane residual substance removal ratio $(1-(X_n/X_0))$ in an n-th washing tank.

FIG. 8 is a front view schematically illustrating a comparative example of a washing device for porous hollow fiber membranes according to the invention.

Description of Embodiments

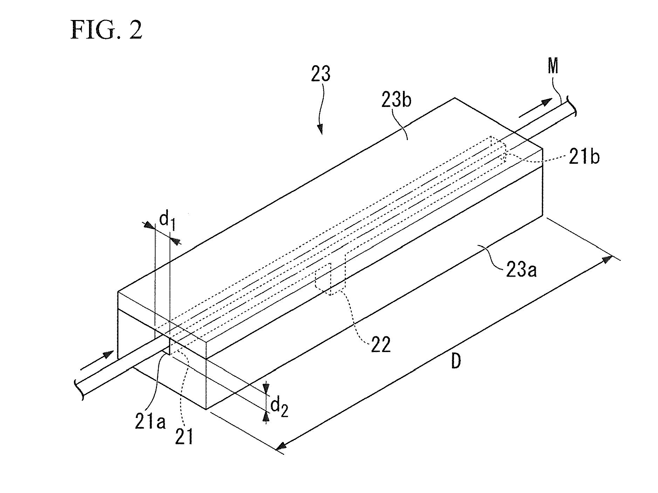

Hereinafter, embodiments of the invention will be described in detail referring to the accompanying drawings. In FIGs. 2 to 6, the same reference numerals are given to components corresponding to an embodiment shown in FIG.

1, and a detailed description thereof will not be repeated here.

[Washing device for porous hollow fiber membranes]

A washing device for porous hollow fiber membranes (hereinafter, referred to as a "washing device') of an embodiment of the invention is a device that washes a porous hollow fiber membrane obtained by coagulating a membrane forming dope in a coagulating liquid and removes a hydrophilic polymer that remains in the porous hollow fiber membrane. The washing device of the present embodiment includes n washing tanks (here, n is an integer of 2 or more) that contain a washing liquid through which a porous hollow fiber membrane passes sequentially, and one or more pressure applying units that pressurize or de-pressurize the washing liquid on the outer side of the porous hollow fiber membrane immersed in the washing liquid to force the washing liquid to pass through a membrane part of the porous hollow fiber membrane.

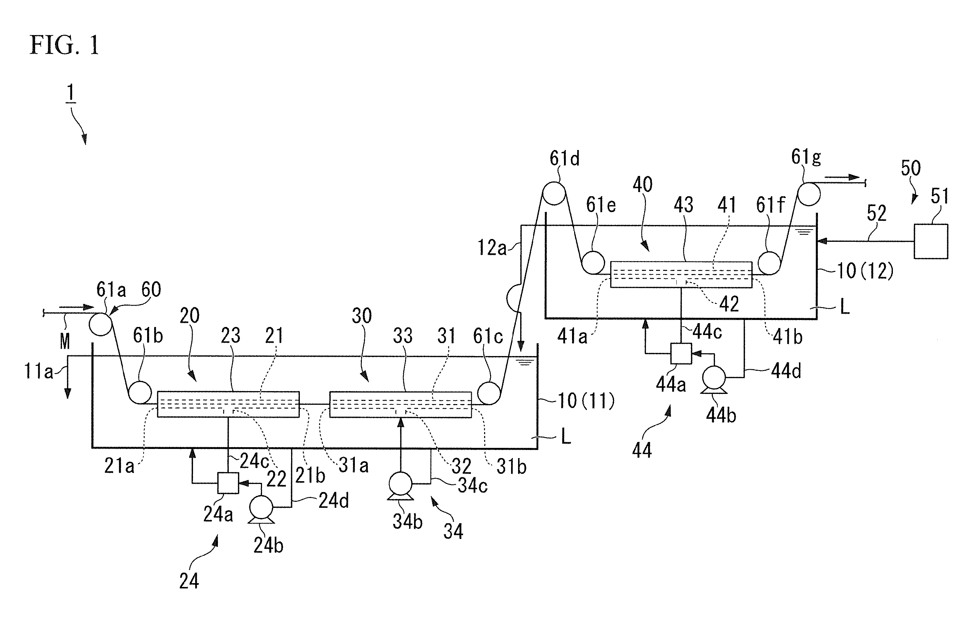

FIG. 1 shows an example of a washing device of the present embodiment.

A washing device 1 shown in FIG. 1 includes two washing tanks 10 that contain a washing liquid L through which a porous hollow fiber membrane M passes sequentially; a first de-pressurization washing unit 20, a pressurization washing unit 30 and a second de-pressurization washing unit 40 that wash the porous hollow fiber membrane M; supply means 50 used to supply a clean washing liquid to the washing tank disposed on the downstream side; and regulation means 60 used to regulate running of the porous hollow fiber membrane M.

The washing device 1 in the shown example includes two washing tanks 10. However, in a case where the washing device 1 includes n (here, n is an integer of 2 or more) washing tanks 10, the washing tanks 10 are numbered as a first washing tank 11, a second washing tank 12 and so on from the upstream side.

Further, in the present embodiment, the "upstream" and the "downstream" are determined with reference to a running direction of the porous hollow fiber membrane M, in which the "upstream side" represents a side where the porous hollow fiber membrane M is supplied to the washing device 1, and the "downstream side" represents a side where the porous hollow fiber membrane M is discharged from the washing device 1.

The first de-pressurization washing unit 20, the pressurization washing unit 30, and the second de-pressurization washing unit 40 are arranged in series, in which the first de-pressurization washing unit 20 and the second de-pressurization washing unit 40 are disposed at opposite ends of the arrangement.

Further, the first de-pressurization washing unit 20 and the pressurization washing unit 30 are accommodated in the first washing tank 11, and the second de-pressurization washing unit 40 is accommodated in the second washing tank 12.

<Washing tank>

The washing tank 10 contains the washing liquid L.

The material of the washing tank 10 is not particularly limited, but for example, a resin such as polyester, polyvinyl chloride, polyethylene, polyamide, polypropylene, or polyacetal; a metal such as iron, aluminum, copper, nickel or titanium; or an alloy obtained by using these metals as a main component (for example, a nickel alloy, a titanium alloy, duralumin, stainless steel or the like), or a composite material thereof may be used. In particular, it is preferable that the material of the first washing tank 11 be titanium.

With respect to the shape and size of the washing tank 10, it is sufficient if the first washing tank 11 allows immersion of flow passage members 23 and 33 to be described later and the second washing tank 12 allows immersion of a flow passage member 43 to be described later.

Overflow pipes 11a and 12a that discharge the washing liquid L overflowed from the washing tank 10 are provided in each washing tank 10. In the case of the washing device 1 in FIG. 1, the washing liquid L overflowed from the second washing tank 12 is supplied to the first washing tank 11 through the overflow pipe 12a of the second washing tank 12. On the other hand, the washing liquid L overflowed from the first washing tank 11 is discharged to the outside through the overflow pipe 11a of the first washing tank 11.

<Pressure-applying unit>

A pressure-applying unit of the washing device of the present embodiment pressurizes or de-pressurizes the washing liquid on the outer side of the porous hollow fiber membrane immersed in the washing liquid, and forces the washing liquid to pass through a membrane part of the porous hollow fiber membrane. The pressure-applying unit is accommodated in at least one of the first tank to the (n-1)-th tank. At least one pressure-applying unit may be used, but it is preferable to use two or more pressure-applying units, and it is most preferable to use two or more de-pressurization washing units that de-pressurize the washing liquid on the outer side of the porous hollow fiber membrane immersed in the washing liquid and force the washing liquid to pass from the inner side of the porous hollow fiber membrane to the outer side, and to use one or more pressurization washing units that pressurize the washing liquid on the outer side of the porous hollow fiber membrane immersed in the washing liquid and supply the washing liquid from the outer side of the porous hollow fiber membrane to the inner side.

In a case where two or more pressure-applying units are used, the de-pressurization washing unit and the pressurization washing unit are arranged in series. The pressurization washing unit is accommodated in at least one of the washing tanks from the first tank to the (n-1)-th tank.

In a case where two or more washing tanks are provided, one pressure-applying unit need not necessarily be accommodated in each washing tank For example, a case where the number n of the washing tanks is 2 and only one pressure-applying unit is accommodated in the first washing tank is also included in the scope of the present embodiment. Further, a case where the number n of the washing tanks is 2 and three pressure-applying units are accommodated in the first washing tank is also included in the scope of the present embodiment. That is, the number n of the washing tanks and the number of the pressure-applying units may not match each other.

<First de-pressurization washing unit>

The first de-pressurization washing unit 20 de-pressurizes the washing liquid on the outer side of the porous hollow fiber membrane M immersed in the washing liquid L, and forces the washing liquid L to pass from the inner side of the porous hollow fiber membrane M to the outer side thereof.

The first de-pressurization washing unit 20 shown in FIG. 1 includes a flow passage member 23 in which a hollow fiber membrane running flow passage 21 through which the porous hollow fiber membrane M passes and a branch flow passage 22 that branches from the hollow fiber membrane running flow passage 21 are formed to penetrate a wall surface of a flow passage member main body 23a as shown in FIG. 2 and openings 21a and 21b at opposite ends of the hollow fiber membrane running flow passage 21 are arranged in the washing liquid L so that the inside the flow passage is filled with the washing liquid L; and liquid suction means 24 used to suction the washing liquid L in the hollow fiber membrane running flow passage 21 of the flow passage member 23 through the branch flow passage 22 to decrease the pressure of the washing liquid L in the hollow fiber membrane running flow passage 21.

The liquid suction means 24 includes an ejector 24a that suctions the washing liquid L, a pump 24b that sends under pressure the washing liquid L to the ejector 24a as a working fluid, a first pipe 24c that is connected to the branch flow passage 22 of the flow passage member 23 at one end thereof and is connected to the first washing tank 11 at the other end thereof, and a second pipe 24d that is connected to the first washing tank 11 at one end thereof and is connected to the ejector 24a at the other end thereof.

As shown in FIG. 1 or 2, the flow passage member 23 is formed so that the hollow fiber membrane running flow passage 21 through which the porous hollow fiber membrane M passes and the branch flow passage 22 branched from the hollow fiber membrane running flow passage 21 penetrate the inside thereof. In this example, as the flow passage member 23 is immersed in the washing liquid L accommodated in the first washing tank 11, the openings 21a and 21b of the hollow fiber membrane running flow passage 21 at the opposite ends are arranged in the washing liquid L, and thus, the washing liquid L flows in through the openings 21a and 21b and the inside of the hollow fiber membrane running flow passage 21 and the branch flow passage 22 is filled with the washing liquid L.

The branch flow passage 22 is connected to the ejector 24a of the liquid suction means 24 through the first pipe 24c, and is able to suction the washing liquid L in the hollow fiber membrane running flow passage 21 through the branch flow passage 22 by the ejector 24a. Thus, it is possible to reduce the pressure of the washing liquid L in the hollow fiber membrane running flow passage 21 due to the loss of the flow pressure of the washing liquid L in the hollow fiber membrane running flow passage 21.

The first de-pressurization washing unit 20 causes the porous hollow fiber membrane M to continuously run through the hollow fiber membrane running flow passage 21 that is filled with the washing liquid L and is in a de-pressurized state in this manner.

As shown in FIG. 2, the flow passage member 23 of this example is formed as an upper part of the flow passage member main body 23a where a groove that forms the hollow fiber membrane running flow passage 21 and the branch flow passage 22 are formed is closed by an upper cover 23b.

The flow passage member 23 may bring the upper cover 23b in close contact with the flow passage member main body 23a without a special mechanism. Then, as the washing liquid L is suctioned through the branch flow passage 22 by the liquid suction means 24, the pressure of the washing liquid L in the hollow fiber membrane running flow passage 21 and the branch flow passage 22 is reduced, the inside thereof enters a de-pressurizing state due to the pressure reduction, and thus, the upper cover 23b is adsorbed to the flow passage member main body 23a. Here, a mechanism that closes the flow passage member main body 23a and the upper cover 23b may be provided in the flow passage member main body 23a and the upper cover 23b. Specifically, if a mechanism that moves up and moves down the upper cover 23b in parallel with the flow passage member main body 23a is provided, it is possible to simply open and close the hollow fiber membrane running flow passage 21. Thus, it is easy to dispose or remove the porous hollow fiber membrane M in the hollow fiber membrane running flow passage 21, which is preferable.

The cross-sectional shape of the hollow fiber membrane running flow passage 21 is preferably a rectangle, as shown in FIG. 2, and is particularly preferably a square, from the viewpoint that it is easy to form the flow passage in a case where the upper part of the flow passage member main body 23a where the groove that forms the hollow fiber membrane running flow passage 21 is formed is closed by the upper cover 23b. Further, if the cross-sectional shape of the hollow fiber membrane running flow passage 21 is a rectangle, it is advantageous that the contact area is small to reduce damage even though the porous hollow fiber membrane M is in contact with the wall surface of the flow passage, compared with the case of a circular cross-sectional shape.

Further, compared with a case where the circular flow passage is formed by forming a semicircular flow passage on both of the side of the flow passage member main body 23a and a matching surface of the upper cover 23b and closing the semicircular flow passages, if the cross-sectional shape of the hollow fiber membrane running flow passage 21 is formed as a rectangle and one side thereof is formed by a bottom part of the upper cover 23b, the flow passage may be formed only on the side of the flow passage member main body 23a, and the matching surface of the upper cover 23b may be formed to be flat. Thus, it is easy to perform flow passage machining, and precise positioning of the side of the flow passage member main body 23a and the upper cover 23b is not necessary. Further, when the porous hollow fiber membrane M is arranged in the flow passage, since the porous hollow fiber membrane M is completely covered by the flow passage, there is no concern that the porous hollow fiber membrane M will be inserted into the matching surface when the upper cover 23b is closed.

Even in a case where the cross-sectional shape of the hollow fiber membrane running flow passage 21 is a triangle, it is possible to achieve the same effect as in a rectangle if one side thereof is formed by the bottom part of the upper cover 23b. In a case where the cross-sectional shape of the hollow fiber membrane running flow passage 21 is a triangle, an equilateral triangle is preferable.

If the cross-sectional shape of the hollow fiber membrane running flow passage 21 is formed as a regular polygon, the flow state of the washing liquid L that flows around the porous hollow fiber membrane M in the hollow fiber membrane running flow passage 21 enters a state that is axially symmetrical with respect to the central axis of the porous hollow fiber membrane M, and thus, the running state of the porous hollow fiber membrane M in the hollow fiber membrane running flow passage 21 is easily stabilized.

Here, the cross-sectional shape of the hollow fiber membrane running flow passage 21 is not limited to a rectangle or a triangle, and a polygon, a circle or the like other than a triangle may be used.

A minimum gap between the wall surface of the hollow fiber membrane running flow passage 21 and the porous hollow fiber membrane M is preferably 5% to 40% of the diameter of the porous hollow fiber membrane M, and more preferably 10% to 20%.

If the minimum gap is equal to or greater than the lower limit value, it is easy to suppress surface damage due to contact of the porous hollow fiber membrane M with the wall surface of the hollow fiber membrane running flow passage 21, and to suppress an increase in running resistance of the porous hollow fiber membrane M.

Accordingly, a width $d_1$ of the hollow fiber membrane running flow passage 21 is preferably 110% to 180% of the diameter of the porous hollow fiber membrane M, and more preferably 120% to 140%. Further, a height $d_2$ of the hollow fiber membrane running flow passage 21 is preferably 110% to 180% of the diameter of the porous hollow fiber membrane M, and more preferably 120% to 140%.

On the other hand, if the minimum gap is equal to or smaller than the upper limit value, it is possible to suppress the porous hollow fiber membrane M from being vibrated or bent due to the flow of the washing liquid L in the hollow fiber membrane running flow passage 21, and to suppress increase in running resistance of the porous hollow fiber membrane M. Further, it is possible to suppress the amount of suction of the washing liquid L in the liquid suction means 24 that is necessary to decrease or decrease the pressure of the washing liquid L in the hollow fiber membrane running flow passage 21 through which the porous hollow fiber membrane M runs to a predetermined pressure.

It is preferable that the inner wall surface of the hollow fiber membrane running flow passage 21 be smoothly finished by precise grinding or polishing so that the surface of the porous hollow fiber membrane M is not damaged even in a case where the porous hollow fiber membrane M comes into contact with the inner wall surface. In addition, it is more preferable that a fluorine coating, a diamond-like carbon coating or the like that reduces frictional resistance with the porous hollow fiber membrane M be performed on the inner wall surface of the hollow fiber membrane running flow passage 21.

A length D of the hollow fiber membrane running flow passage 21 is preferably 100 mm to 2000 mm, and more preferably 300 mm to 1000 mm. If the length of the hollow fiber membrane running flow passage 21 is equal to or greater than the lower limit value, the amount of suction of the washing liquid L necessary for the de-pressurization around the porous hollow fiber membrane M is decreased. If the length of the hollow fiber membrane running flow passage 21 is equal to or smaller than the upper limit value, it is easy to suppress excessive increase in running resistance of the porous hollow fiber membrane M or in the size of the washing device 1.

In the first de-pressurization washing unit 20, it is preferable that the distance from the opening 21b to the branch flow passage 22 and the distance from the opening 21a to the branch flow passage 22 be the same, and a structure of the flow passage from the opening 21b to the branch flow passage 22 and a structure of the flow passage from the opening 21a to the branch flow passage 22 be symmetrical with reference to the branch flow passage 22.

With such a structure, when the washing liquid L is suctioned by the liquid suction means 24 from the branch flow passage 22, a force that attracts the porous hollow fiber membrane M into the hollow fiber membrane running flow passage 21 (a compressive force in a central axis direction of the membrane) is symmetric with reference to the branch flow passage 22.

The cross-sectional shape of the branch flow passage 22 is not particularly limited, and may be a circle or a rectangle.

As the material of the flow passage member 23, any material that is not corroded in the washing liquid L and not affected in the washing liquid L and is capable of maintaining a sufficient strength so as not to be deformed or damaged due to suction of the washing liquid L may be used without particular limit. For example, resin such as polyester, polyvinyl chloride, polyethylene, polyamide, polypropylene or polyacetal, metal such as iron, aluminum, copper, nickel or titanium, an alloy thereof, or a composite material thereof may be used. In particular, titanium is preferable.

The liquid suction means 24 suctions the washing liquid L in the hollow fiber membrane running flow passage 21 through the branch flow passage 22, to thereby reduce the pressure of the washing liquid L in the hollow fiber membrane running flow passage 21. The liquid suction means 40 in this example includes the ejector 24a that suctions the washing liquid L, the pump 24b that sends under pressure the washing liquid L to the ejector 24a as a working fluid, the first pipe 24c, and the second pipe 24d. The ejector 24a is connected to the branch flow passage 22 and the first washing tank 11 through the first pipe 24c, and is able to suction the washing liquid L through the branch flow passage 22 or the first pipe 24c from the hollow fiber membrane running flow passage 21.

The suctioned washing liquid L is returned to the first washing tank 11 through the first pipe 24c. Here, the washing device 1 of the present embodiment is not limited to such a configuration, and the washing liquid L suctioned by the liquid suction means 24 may be discarded, or may be transported to a separate process.

The ejector 24a suctions the washing liquid L in the hollow fiber membrane running flow passage 21 through the branch flow passage 22 using kinetic energy of the washing liquid L that is sent under pressure from the pump 24b. Specifically, the pump 24b pressurizes the washing liquid L and the washing liquid L is discharged from a nozzle (not shown) at high speed, to thereby suction the washing liquid L using the motion energy of the washing liquid L.

Normally, in a case where a liquid is suctioned at high de-pressurization, vacuum bubbles or vapor bubbles due to low-pressure boiling are generated in a pump passage or an impeller, which may cause abnormal vibration in the pump or damage of the impeller due to cavitation.

The suction through the ejector 24a is effective to prevent such a phenomenon or pump damage.

The structure of the ejector 24a is very simple and does not have a rotating unit such as a pump, and thus, even though vacuum bubbles or vapor bubbles due to low-pressure boiling are generated inside, the ejector 24a is barely damaged. In addition, even though foreign substances are suctioned, the possibility of damage or clogging is low. Further, for example, in a case where the porous hollow fiber membrane M is cut inside the first de-pressurization washing unit 20, if an end part of the porous hollow fiber membrane M is suctioned together with the washing liquid L through the branch flow passage 22, the end part of the porous hollow fiber membrane M may be wound on the rotating part of the pump. Thus, the pump may be locked to be stopped, or a pump impeller or a motor may be damaged.

On the other hand, in the case of the ejector 24a, there is no portion where the end part of the porous hollow fiber membrane M is wound, and the end part of the porous hollow fiber membrane M and the washing liquid L that is pressurized and supplied to the ejector 24a from the pump 24b are discharged from a discharge port of the ejector 24a, and thus, there is no concern that the pump 24b will be damaged.

As the pump 24b, a pump that is capable of suctioning the washing liquid L from the first washing tank 11, supplying the suctioned washing liquid L to the ejector 24a, and achieving necessary de-pressurization is preferably used. For example, a single-stage or multi-stage centrifugal pump, a cascade pump, a scroll pump, a gear pump or the like may be used. Further, a sealless pump in which a drive shaft of the pump and a rotation shaft of a motor are connected to each other by a magnetic coupling is particularly preferable since the rotation shaft of the pump is shielded from the air outside and there is no concern that the air outside will leak into the washing liquid L of the highly de-depressurized state through a seal part and thus the pump efficiency will be reduced due to low-pressure expansion.

It is preferable that the liquid suction means 24 be controllable by an inverter (not shown).

Further, it is more preferable that a pressure sensor (not shown) be provided in a portion to be maintained at a constant pressure and an output of the pressure sensor be fed back to the inverter to automatically control the pump rotation speed or the like of the pump 24b of the liquid suction means 24.

The pressure range when the pressure is reduced by the de-pressurization washing unit is preferably -0.1 MPa or greater and smaller than 0 MPa, more preferably -0.09 MPa or greater and smaller than -0.03 MPa, and most preferably -0.08 MPa or greater and smaller than -0.04 MPa.

<Pressurization washing unit>

The pressurization washing unit 30 pressurizes the washing liquid on the outer side of the porous hollow fiber membrane M immersed in the washing liquid, and supplies the washing liquid L from the outer side of the porous hollow fiber membrane M to the inner side.

The pressurization washing unit 30 includes a flow passage member 33 in which a hollow fiber membrane running flow passage 31 through which the porous hollow fiber membrane M passes and a branch flow passage 32 that branches from the hollow fiber membrane running flow passage 31 are formed to penetrate the inside thereof and openings 31a and 31b at opposite ends of the hollow fiber membrane running flow passage 31 are arranged in the washing liquid L so that the inside of the flow passage is filled with the washing liquid L; and liquid push-in means 34 used to push the washing liquid L into the hollow fiber membrane running flow passage 31 of the flow passage member 33 through the branch flow passage 22 to increase the pressure of the washing liquid L in the hollow fiber membrane running flow passage 31.

The liquid push-in means 34 includes a pump 34b that sends under pressure the washing liquid L to the hollow fiber membrane running flow passage 31, a first pipe 34c that is connected to the first washing tank 11 at one end thereof and is connected to the branch flow passage 32 of the flow passage member 33 at the other end thereof.

It is preferable that the pressurization washing unit be accommodated in at least one of the washing tanks from the first tank to the (n-1)-th tank, and the pressurization washing unit may be further accommodated in the n-th washing tank.

The branch flow passage 32 is connected to the pump 34b of the liquid push-in means 34 through the first pipe 34c, and is able to push the washing liquid L into the hollow fiber membrane running flow passage 31 through the branch flow passage 32 by the pump 34b. Thus, it is possible to increase the pressure of the washing liquid L in the hollow fiber membrane running flow passage 31 due to loss of the flow pressure of the washing liquid L in the hollow fiber membrane running flow passage 31.

The pressurization washing unit 30 causes the porous hollow fiber membrane M to continuously run through the hollow fiber membrane running flow passage 31 that is filled with the washing liquid L and is in a pressurized state in this manner.

The configuration of the flow passage member 33 is the same as that of the flow passage member 23 of the first de-pressurization washing unit 20. That is, in a similar way to the flow passage member 23 shown in FIG. 2, the upper part of the flow passage member main body 23a where the groove that forms the hollow fiber membrane running flow passage 21 and the branch flow passage 22 are formed is closed by the upper cover 23b.

In a case where the flow passage member 23 shown in FIG. 2 is used as the flow passage member 33, if the washing liquid L is pushed in a state where the upper cover 23b is in close contact with the flow passage member main body 23a, the inside of the hollow fiber membrane running flow passage 21 enters a pressurized state, and a force that pushes up the upper cover 23b acts to push up the upper cover 23b from the flow passage member main body 23a. Thus, a gap is generated, and the washing liquid L in the pressurized state leaks and the pressure of the washing liquid L inside is reduced. Thus, it is preferable to apply a closing force larger than the force that pushes up the upper cover 23b all the time. In order to give the closing force to the upper cover 23b, it is preferable to fasten the upper cover 23b to the flow passage member main body 23a using a bolt or the like, or to use a fluid driving mechanism such as a feed screw mechanism, an oil hydraulic cylinder, an air pressure cylinder or a water pressure cylinder that is capable of moving up and moving down the upper cover 23b, giving the upper cover the closing force.

Further, the cross-sectional shapes of the hollow fiber membrane running flow passage 31 and the branch flow passage 32 are the same as those of the flow passage member 23 of the first de-pressurization washing unit 20. Further, the width, height and length of the hollow fiber membrane running flow passage 31 are the same as the width, height and length of the flow passage member 23 of the first de-pressurization washing unit 20.

In the pressurization washing unit 30, the distance from the opening 31b to the branch flow passage 32 and the distance from the opening 31a to the branch flow passage 32 may be the same, and for example, in a case where the porous hollow fiber membrane M moves toward the opening 31b from the opening 31a, the distance from the branch flow passage 32 to the opening 31b may be set to be shorter than the distance from the branch flow passage 32 to the opening 31a.

In particular, if a structure in which the distance from the branch flow passage 32 to the opening 31b may be set to be shorter than the distance from the branch flow passage 32 to the opening 31a is used, when the washing liquid L is pushed through the branch flow passage 32 by the liquid push-in means 34, a force that attracts the porous hollow fiber membrane M out of the hollow fiber membrane running flow passage 31 (a tensional force in a central axis direction of the membrane) with reference to the branch flow passage 32 is generated in the porous hollow fiber membrane M, but the force is strong on the side of the opening 31b, and thus, may be used as a driving force that moves the porous hollow fiber membrane M from the opening 31a to the opening 31b.

The liquid push-in means 34 suctions the washing liquid L in the first washing tank 11, and pushes the washing liquid L through the branch flow passage 32 to increase the pressure of the washing liquid L in the hollow fiber membrane running flow passage 31.

The liquid push-in means 34 of this example includes the pump 34b that sends under pressure the washing liquid L into the hollow fiber membrane running flow passage 31, and the first pipe 34c. The pump 34b is connected to the branch flow passage 32 and the first washing tank 11 through the first pipe 34c, so that the washing liquid L can be pushed into the hollow fiber membrane running flow passage 31 through the branch flow passage 32 through the first pipe 34c.

The liquid push-in means 34 has a head and a discharge amount that can push the washing liquid L into the hollow fiber membrane running flow passage 31 through the branch flow passage 32 to generate a predetermined pressure, and may employ a material that is not corroded in the washing liquid L or is coated at a wetted part thereof. For example, a single-stage or multi-stage centrifugal pump, a cascade pump, a scroll pump, a gear pump or the like may be used. Further, a sealless pump in which a drive shaft of the pump or a rotation shaft of a motor are connected to each other by a magnetic coupling is particularly preferable since the rotation shaft of the pump is shielded from the air outside and there is no concern that the air outside will leak into the washing liquid L of the highly depressurized state through the seal part and thus the pump efficiency will be reduced due to low-pressure expansion.

It is preferable that the liquid push-in means 34 be controllable by an inverter (not shown).
Further, it is more preferable that a pressure sensor (not shown) be provided in a portion to be maintained at a constant pressure and an output of the pressure sensor be fed back to the inverter to automatically control the pump rotation speed or the like of the pump 34b of the liquid push-in means 34.

The pressure range when the pressure is given by the pressurization washing unit is preferably 0.01 MPa or greater and smaller than 1 MPa, more preferably 0.05 MPa or greater and smaller than 0.5 MPa, and most preferably 0.1 MPa or greater and smaller than 0.3 MPa.

<Second de-pressurization washing unit>

The second de-pressurization washing unit 40 de-pressurizes the washing liquid on the outer side of the porous hollow fiber membrane M immersed in the washing liquid, and forces the washing liquid to pass from the inner side of the porous hollow fiber membrane M to the outer side.
The second de-pressurization washing unit 40 includes a flow passage member 43 in which a hollow fiber membrane running flow passage 41 through which the porous hollow fiber membrane M passes and a branch flow passage 42 that branches from the hollow fiber membrane running flow passage 41 are formed to penetrate the inside and openings 41 a and 41b at opposite ends of the hollow fiber membrane running flow passage 41 are arranged in the washing liquid L so that the inside of the flow passage is filled with the washing liquid L; and liquid suction means 44 used to suction the washing liquid L in the hollow fiber membrane running flow passage 41 of the flow passage member 43 through the branch flow passage 42 and to reduce the pressure of the washing liquid L in the hollow fiber membrane running flow passage 41.
The liquid suction means 44 includes an ejector 44a that suctions the washing liquid L, a pump 44b that sends under pressure the washing liquid L to the ejector 44a as a working fluid, a first pipe 44c that is connected to the branch flow passage 42 of the flow passage member 43 at one end thereof and is connected to the second washing tank 12 at the other end thereof, and a second pipe 44d that is connected to the second washing tank 12 at one end thereof and is connected to the ejector 44a at the other end thereof.
Since the second de-pressurization washing unit 40 has the same configuration as that of the first de-pressurization washing unit 20, a description of the respective members will not be included here.

<Supply means>

The supply means 50 supplies a clean washing liquid to one or more washing tanks (the second washing tank 12 in the case of the washing device 1 in FIG. 1) from the second tank to the n-th tank. It is preferable that the supply means 50 supply the clean washing liquid to the n-th tank.
The supply means 50 includes a tank 51 that accommodates the clean washing liquid, and a supply pipe 52 that sends the clean washing liquid to the second washing tank 12.

<Regulation means>

The regulation means 60 regulates the running of the porous hollow fiber membrane M.
The regulation means 60 in FIG. 1 includes guide rolls 61a to 61g. The running of the porous hollow fiber membrane M is regulated by the guide rolls 61a to 61g. Specifically, as shown in FIG. 1, the porous hollow fiber membrane M is continuously drawn into the washing liquid L accommodated in the first washing tank 11, is introduced into the hollow fiber membrane running flow passage 21 of the flow passage member 23 from the opening 21a of the first de-pressurization washing unit 20, passes through the washing liquid L in the hollow fiber membrane running flow passage 21, and then, exits from the opening 21b. Then, the porous hollow fiber membrane M is introduced into the hollow fiber membrane running flow passage 31 of the flow passage member 33 from the opening 31a of the pressurization washing unit 30, passes through the washing liquid L in the hollow fiber membrane running flow passage 31, and then, exits from the opening 31b. Then, the porous hollow fiber membrane M is extracted to the outside of the washing liquid L. Subsequently, the porous hollow fiber membrane M is drawn into the washing liquid L accommodated in the second washing tank 12, is introduced into the hollow fiber membrane running flow passage 41 of the flow passage member 43 from the opening 41a of the second de-pressurization washing unit 40, passes through the washing liquid L in the hollow fiber membrane running flow passage 41, and then, exits from the opening 41b. Then, the porous hollow fiber membrane M is extracted to the outside of the washing liquid L.

As the guide rolls 61a to 61g in the regulation means 60, guide rolls that are normally used in manufacturing of the porous hollow fiber membrane may be used.

<Effects>

In the washing device 1 of the present embodiment, if the porous hollow fiber membrane M is immersed in the first washing tank 11, the washing liquid L passes through the porous hollow fiber membrane M and is introduced to the inner side of the porous hollow fiber membrane M. Then, the introduced washing liquid L passes through the porous hollow fiber membrane M again by the operation of the first de-pressurization washing unit 20 and is discharged to the outer side thereof. Consequently, the hydrophilic polymer (including decomposed materials thereof) that remains in the porous hollow fiber membrane M is removed together with the washing liquid L from the branch flow passage 22.

Further, in the pressurization washing unit 30, the washing liquid L is supplied to the inner side from the outer side of the porous hollow fiber membrane M. Then, the hydrophilic polymer in the porous hollow fiber membrane M is pressed into a membrane hollow part while being substituted or diluted by the washing liquid L. In addition, in the first de-pressurization washing unit 20 on the upstream side, the amount of the washing liquid that passes from the inner side of the porous hollow fiber membrane M to the outer side thereof is increased, and consequently, a removal effect of the hydrophilic polymer is improved.

Further, if the porous hollow fiber membrane M is immersed in the second washing tank 12, the washing liquid L passes through the porous hollow fiber membrane M and is introduced to the inner side of the porous hollow fiber membrane M. The introduced washing liquid L passes through the porous hollow fiber membrane M again by the operation of the second de-pressurization washing unit 40 and then is discharged to the outer side. Consequently, the hydrophilic polymer that is pressed into the membrane hollow part by the pressurization washing unit 30 is removed together with the washing liquid L. Further, it is possible to achieve a high removal effect with respect to a polymer that is not easily removed, such as a polymer that is attached to a wall surface of the porous part of the porous hollow fiber membrane M, among the hydrophilic polymers that remain in the porous hollow fiber membrane M.

In the washing device 1 of the present embodiment, the second de-pressurization washing unit 40 is accommodated in a different washing tank 10 unlike the first de-pressurization washing unit 20 and the pressurization washing unit 30. Further, most of the hydrophilic polymer that remains in the porous hollow fiber membrane M is removed by the first de-pressurization washing unit 20 and the pressurization washing unit 30. Accordingly, since the porous hollow fiber membrane M with a small amount of residue such as a hydrophilic polymer passes into the second washing tank 12, the washing liquid L in the second washing tank 12 is barely contaminated by the hydrophilic polymer. Further, a clean washing liquid is supplied to the second washing tank 12 in which the second de-pressurization washing unit 40 is accommodated, and the overflowed washing liquid L is discharged to the first washing tank 11 through the overflow pipe 12a. Thus, in the second de-pressurization washing unit 40, it is possible to clean the porous hollow fiber membrane M by a relatively clean washing liquid, and it is thus possible to suppress the hydrophilic polymer from being imported in the porous hollow fiber membrane M or from being attached to the surface of the porous hollow fiber membrane M without use of an excessive amount of washing liquid.

Accordingly, according to the washing device 1 of the present embodiment, it is possible to reduce the concentration of residual substances in the membrane retained water while suppressing the usage amount of the washing liquid, and to prevent reattachment of the hydrophilic polymers. In addition, since it is possible to supply the washing liquid discharged from the second washing tank 12 to the first washing tank 11 and to reuse the washing liquid in washing in the first de-pressurization washing unit 20 and the pressurization washing unit 30, it is possible to reduce the usage amount of the washing liquid.

<Other embodiments>

The washing device of the present embodiment is not limited to the washing device 1 shown in FIG. 1. For example, in the washing device 1, all the flow passage members 23, 33 and 43 are immersed in the washing liquid L, but the washing device is not limited to a configuration in which all the flow passage members 23, 33 and 43 are immersed in the washing liquid L as long as the openings 21a and 21b, 31a and 31b, and 41a and 41b at the opposite ends of the hollow fiber membrane running flow passages 21, 31 and 41 are arranged in the washing liquid L and the insides the flow passages are filled with the washing liquid L.

The pressurization washing unit 30 may be configured so that the inside of the hollow fiber membrane running flow passage 31 is filled with the washing liquid L pushed through the branch flow passage 32 by the liquid push-in means 34 and the washing liquid L is discharged from the openings 31a and 31b at the opposite ends thereof through the hollow fiber membrane running flow passage 31.

Further, the liquid suction means 24 and 44 of the first de-pressurization washing unit 20 and the second de-pressurization washing unit 40 are not limited to a suction system that uses the ejectors 24a and 44a, and for example, may suction the washing liquid L in the hollow fiber membrane running flow passages 21 and 41 through the branch flow passages 22 and 42 using a suction pump or the like.

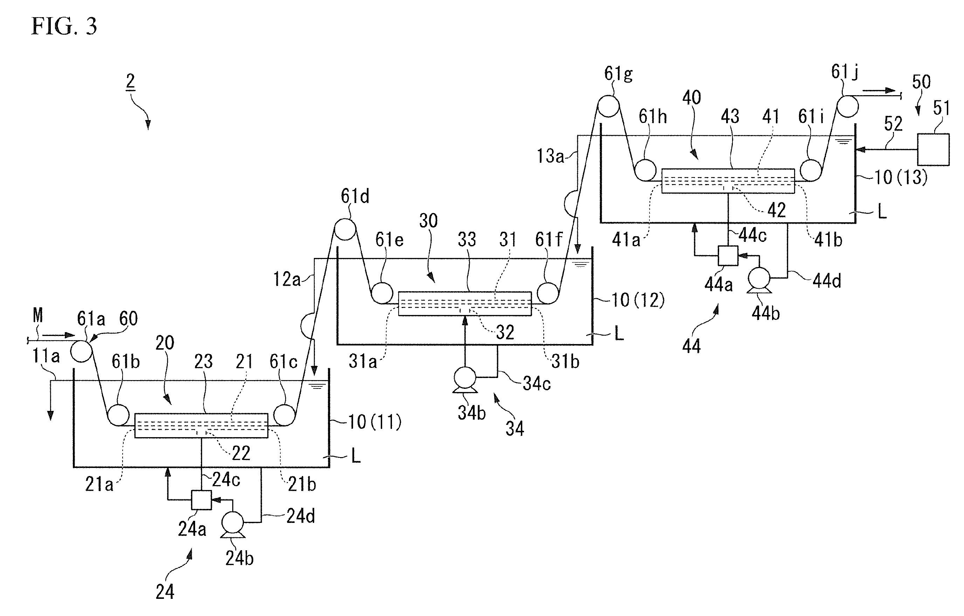

Further, in the washing device 1 shown in FIG 1, the first de-pressurization washing unit 20 and the pressurization washing unit 30 are accommodated in the same washing tank 11, but for example, as shown in FIG. 3, the first de-pressurization washing unit 20 and the pressurization washing unit 30 may be accommodated in different washing tanks 10. In a washing device 2 of this example, the first de-pressurization washing unit 20 is accommodated in the first washing tank 11, the pressurization washing unit 30 is accommodated in the second washing tank 12, and the second de-pressurization washing unit 40 is accommodated in a third washing tank 13, respectively. The washing liquid overflowed from the third washing tank 13 is supplied to the second washing tank 12, the washing liquid overflowed from the second washing tank 12 is supplied to the first washing tank 11, and the washing liquid overflowed from the first washing tank 11 is discharged to the outside of the system. In FIG. 3, reference numeral 13a represents an overflow pipe, and reference numerals 61h to 61j represent guide rolls.

Here, from the viewpoint of miniaturization of the washing device, the washing device 1 shown in FIG. 1 in which the first de-pressurization washing unit 20 and the pressurization washing unit 30 are accommodated in the same washing tank 10 is preferable.

In the above-described embodiment, the washing device in which one pressurization washing unit is provided between the first de-pressurization washing unit and the second de-pressurization washing unit is described, but the invention is not limited thereto, and two or more pressurization washing units may be provided.

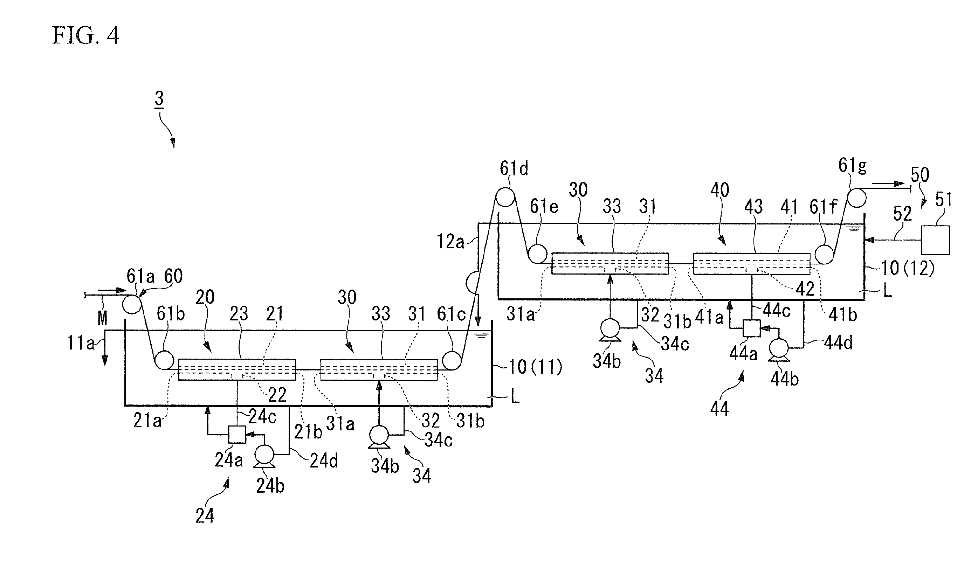

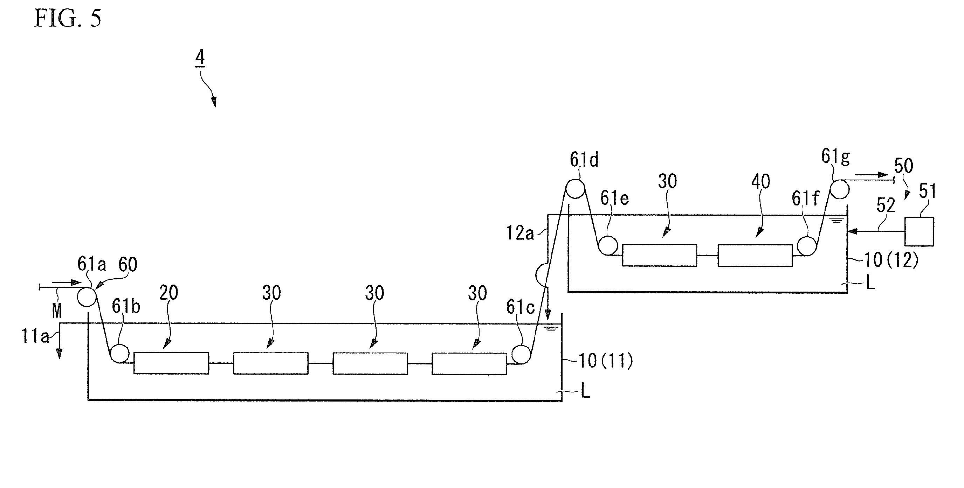

In a case where two or more pressurization washing units are provided, it is preferable that the pressurization washing units be also accommodated in at least the n-th washing tank. For example, as shown in FIG. 4 or 5, in the second washing tank 12, it is preferable that the pressurization washing unit 30 be provided on the upstream side of the second de-pressurization washing unit 40.

A washing device 3 shown in FIG. 4 is configured so that one pressurization washing unit 30 is provided on the downstream side of the first de-pressurization washing unit 20 in the first washing tank 11, and a washing device 4 shown in FIG. 5 is configured so that three pressurization washing units 30 are provided in series on the downstream side of the first de-pressurization washing unit 20 in the first washing tank 11.

Further, in FIG. 5, in the first de-pressurization washing unit 20, the pressurization washing units 30 and the second de-pressurization washing unit 40, the components such as liquid suction means or liquid pressurization means are not shown.

Here, in a case where the porous hollow fiber membrane M is provided to the washing device 1 or 2 shown in FIG. 1 or 3, most of the hydrophilic polymer that remains in the porous hollow fiber membrane M is removed by the first de-pressurization washing unit 20 and the pressurization washing unit 30, but is dispersed in the washing liquid L in the washing tank 10 in which the first de-pressurization washing unit 20 and the pressurization washing unit 30 are accommodated, to thereby contaminate the washing liquid L.

Further, as described in detail later, when the hydrophilic polymer in the porous hollow fiber membrane is removed, a molecular weight-reducing process of the hydrophilic polymer that use an oxidizing agent and a washing process may be performed as preparation processes. The oxidizing agent used in the molecular weight-reducing process is mostly removed in the washing process of the preparation process, but if the porous hollow fiber membrane is provided to the washing device 1 or 2 in a state where the oxidizing agent remains, the residual oxidizing agent is removed by the first de-pressurization washing unit 20 and the pressurization washing unit 30 together with the hydrophilic polymer or the like and is dispersed in the washing liquid L, to thereby contaminate the washing liquid.

In the pressurization washing unit 30, since the contaminated washing liquid is supplied to the inner side from the outer side of the porous hollow fiber membrane M, the contaminated washing liquid may flow back to the n-th washing tank in which the second de-pressurization washing unit 40 is accommodated through the membrane. In this case, there is a concern that the washing liquid L in the n-th washing tank will become contaminated. This tendency is noticeable when the number of washing tanks is small.

However, as shown in FIGs. 4 and 5, if the pressurization washing unit 30 is also provided in the n-th (second) washing tank 12, it is possible to prevent the washing liquid supplied to the inner side of the porous hollow fiber membrane M by the pressurization washing unit 30 in the (n-1)-th (first) washing tank 11 from flowing back to the second washing tank 12. Consequently, it is possible to more effectively prevent the washing liquid L in the second washing tank 12 from being contaminated. The reason may be considered as follows.

That is, if the pressurization washing unit 30 is also provided in the second washing tank 12, the washing liquid supplied to the inner side of the porous hollow fiber membrane M by the pressurization washing unit 30 in the first washing tank 11 is discharged from the porous hollow fiber membrane M before reaching the second washing tank 12 by the washing liquid supplied to the inner side of the porous hollow fiber membrane M by the pressurization washing unit 30 in the second washing tank 12, and it is possible to prevent the washing liquid from flowing back to the second washing tank 12. Here, the discharge of the washing liquid before reaching the second washing tank 12 mainly refers to discharge of the washing liquid from the porous hollow fiber membrane M in a space (inter-tank emptying feed unit) before the porous hollow fiber membrane M extracted from the first washing tank 11 reaches the guide roll 61d, and the discharged washing liquid is returned to the first washing tank 11.

Further, as described above, even in a case where the oxidizing agent is attached to the porous hollow fiber membrane M, since it is possible to prevent the back flow of the washing liquid from the first washing tank 11, even though members that form the second washing tank 12, and the pressurization washing unit 30 and the second de-pressurization washing unit 40 that are accommodated in the second washing tank 12 are formed of a material (for example, SUS or the like) having low corrosiveness against the oxidizing agent, there are no problems regarding corrosion due to the oxidizing agent. However, since a large amount of oxidizing agent removed from the porous hollow fiber membrane M is included in the washing liquid L of the first washing tank 11, it is preferable that members that form the first washing tank 11, and the first de-pressurization washing unit 20 and the pressurization washing unit 30 that are accommodated in the first washing tank 11 be formed of a material (for example, titanium or the like) having corrosion resistance.

In the above-described washing devices 1 to 4, the respective washing tanks are arranged side by side so that the washing tank on the downstream side is located at a position higher than the washing tank on the upstream side, but may be arranged in a side-by-side manner so that the respective washing tanks are located at the same height. Here, in a case where the washing liquid is reused, the washing liquid is supplied to the washing tank on the upstream side from the washing tank on the downstream side.

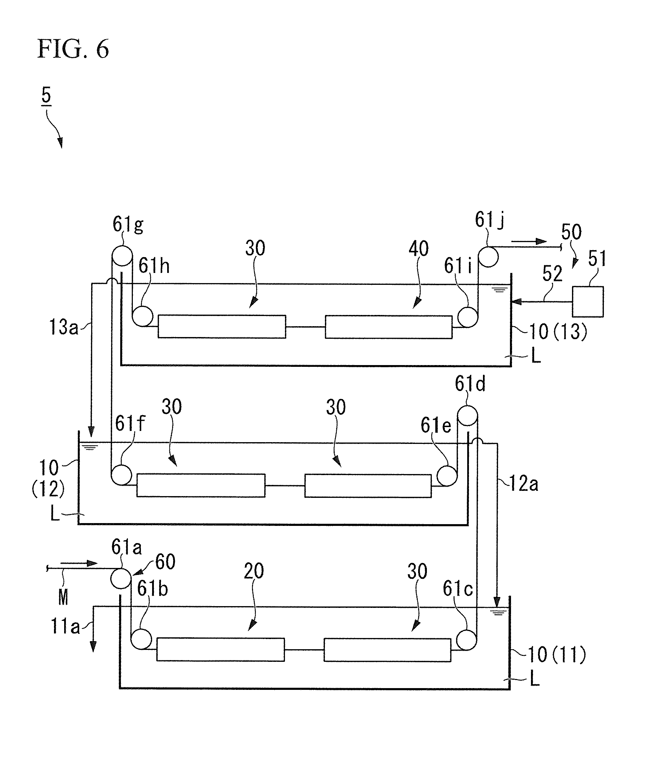

Further, for example, as shown in FIG. 6, a washing device 5 in which respective washing tanks are vertically arranged in the order of the first washing tank 11, the second washing tank 12 and the third washing tank 13 from the bottom may be used.

In a device such as the washing device 5 shown in FIG. 6 in which the respective washing tanks are vertically arranged, even though the number of washing tanks or the number of pressurization washing units is increased, it is preferable in terms of space-saving since a large space is not necessary compared with the device in which the respective washing tanks are arranged in a side-by-side manner.

In FIG. 6, reference numeral 13a represents an overflow pipe, and reference numerals 61h to 61j represent guide rolls. Further, in FIG. 6, in the first de-pressurization washing unit 20, the pressurization washing unit 30 and the second de-pressurization washing unit 40, liquid suction means, liquid pressurization means or the like are not shown.

In the above-described embodiment, the washing liquid is supplied to the washing tank on the upstream side from the washing tank on the downstream side so that the washing liquid overflowed from the n-th washing tank is supplied to the (n-1)-th washing tank and the washing liquid overflowed from the (n-1)-th washing tank is supplied to the (n-2)-th washing tank to be reused in washing the porous hollow fiber membrane, but the washing device of the invention is not limited thereto.

For example, the washing liquid overflowed from the n-th washing tank may not be supplied to the (n-1)-th washing tank, and may be discharged to the outside. Further, a part of the washing liquid overflowed from the n-th washing tank may be supplied to the (n-1)-th washing tank, and the remaining washing liquid may be discharged to the outside. Further, the clean washing liquid may also be supplied to the (n-1)-th washing tank. This is similarly applied to the washing liquid overflowed from the washing tank on the upstream side of the n-th washing tank, and for example, the washing liquid overflowed from the (n-1)-th washing tank may be supplied to the (n-2)-th washing tank, or may not be supplied thereto.

Further, in the above-described embodiment, the de-pressurization washing units and the pressurization washing unit are arranged in series, and the de-pressurization washing units are disposed at the opposite ends of the arrangement, but in the washing device of the present embodiment, it is sufficient if the de-pressurization washing units are disposed at least at the opposite ends of the arrangement, and thus, the de-pressurization washing units may also be provided in the middle of the arrangement.

Further, the number (n) of the washing tanks is not limited as long as it is two or more, and two or three washing tanks are preferable from the viewpoint of miniaturization of the washing device.

Porous hollow fiber membrane production method

A porous hollow fiber membrane production method according to an embodiment of the invention includes a coagulation process of coagulating a membrane forming dope that includes a hydrophobic polymer and a hydrophilic polymer in a coagulating liquid to form a porous hollow fiber membrane, and a hydrophilic polymer removal process of washing the porous hollow fiber membrane to remove the hydrophilic polymer that remains in the porous hollow fiber membrane. Further, the porous hollow fiber membrane production method includes a drying process of drying the porous hollow fiber membrane after the hydrophilic polymer removal process.

Hereinafter, the porous hollow fiber membrane production method of the present embodiment will be described in detail.

<Coagulation process>

In the porous hollow fiber membrane production method of the present embodiment, first, the membrane forming dope that includes the hydrophobic polymer and the hydrophilic polymer is prepared. Then, the porous hollow fiber membrane is formed by the coagulation process of discharging the membrane forming dope to the coagulating liquid through a nozzle in which an annular discharge port is formed to be coagulated in the coagulating liquid.

The hydrophobic polymer may be formed of a material capable of forming the porous hollow fiber membrane by the coagulation process. Such a material may be used without a particular limit, but a polysulfone-based resin such as polysulfone or polyethersulfone, a fluorine-based resin such as polyvinylidene fluoride, polyacrylonitrile, cellulose derivatives, polyamide, polyester, polymethacrylate, polyacrylate, or the like may be used. Further, a copolymer of these resins may be used, or a polymer obtained by introducing a substituent to a part of these resins or the copolymer may be used. Further, the same type of polymers having different molecular weights or the like may be blended for use, or two or more types of resins may be mixed for use.

Particularly, the fluorine-based resin, and specifically, a copolymer made of a simple substance of polyvinylidene fluoride or vinylidene fluoride and a different monomer has superior durability against an oxidizing agent such as hypochlorous acid.

Accordingly, for example, when the porous hollow fiber membrane processed by an oxidizing agent is manufactured by the hydrophilic polymer removal process to be described later, it is preferable to select the fluorine-based resin as the hydrophobic polymer.

The hydrophilic polymer is added to adjust the viscosity of the membrane forming dope in a range that is suitable for formation of the porous hollow fiber membrane to stabilize a membrane formation state, and polyethylene glycol, polyvinylpyrrolidone or the like may be preferably used as the hydrophilic polymer. Here, from the viewpoint of control of the pore diameter of the porous hollow fiber membrane or the strength of the porous hollow fiber membrane, polyvinylpyrrolidone or a copolymer obtained by copolymerizing a different monomer in polyvinylpyrrolidone is preferably used. Further, two or more types of resins may be mixed for use with the hydrophilic polymer. For example, if a high molecular weight polymer is used as the hydrophilic polymer, there is a tendency that a porous hollow fiber membrane having a favorable membrane structure is easily formed. On the other hand, a low molecular weight hydrophilic polymer is preferable because the polymer is easily removed from the porous hollow fiber membrane in the hydrophilic polymer removal process to be described later. Accordingly, the same type of hydrophilic polymers having different molecular weights may be appropriately blended for use as necessary.

By mixing the hydrophobic polymer and the hydrophilic polymer as described above with a solvent (good solvent) capable of dissolving the hydrophobic polymer and the hydrophilic polymer, it is possible to prepare a membrane forming dope. A different ingredient may be added to the membrane forming dope as desired.

The type of the solvent is not particularly limited, but in a case where the coagulation process is performed in dry-wet spinning, since the pore diameter of the porous hollow fiber membrane is adjusted by causing the membrane forming dope to absorb moisture in an idle running section, it is preferable to select a solvent that is easily and uniformly mixed with water. As the solvent, N,N-dimethylformamide, N,N-dimethylacetamide, dimethyl sulfoxide, N-methyl-2-pyrrolidone, N-methylmorpholine-N-oxide or the like may be used, and one or more types of them may be used. Further, in a range where solubility of the hydrophobic polymer or the hydrophilic polymer in the solvent is not impaired, a poor solvent of the hydrophobic polymer or the hydrophilic polymer may be combined for use.

The temperature of the membrane forming dope is not particularly limited, but is normally 20°C to 40°C.

If the concentration of the hydrophobic polymer in the membrane forming dope is too thin or thick, there is a tendency that stability in membrane production is reduced to make it difficult to form a preferable porous hollow fiber membrane structure. Thus, a lower limit of the concentration is preferably 10 mass%, and more preferably 15 mass%. Further, an upper limit thereof is preferably 30 mass%, and more preferably 25 mass%.

The concentration range of the hydrophobic polymer in the membrane forming dope is preferably 10 mass% to 30 mass%, and more preferably 15 mass% to 25 mass%.

On the other hand, a lower limit of the concentration of the hydrophilic polymer is preferably 1 mass% so as to easily form the porous hollow fiber membrane, and more preferably 5 mass%. An upper limit of the concentration of the hydrophilic polymer is preferably 20 mass% in terms of operability of the membrane forming dope, and more preferably 12 mass%.

The concentration range of the hydrophilic polymer in the membrane forming dope is preferably I mass% to 20 mass%, and more preferably 5 mass% to 12 mass%.

As the membrane forming dope prepared in this way is discharged through an annular discharge nozzle or the like and is immersed in the coagulating liquid, the hydrophobic polymer is coagulated, and thus, a porous hollow fiber membrane formed of the hydrophobic polymer and the hydrophilic polymer is obtained. Here, it is inferred that the hydrophilic polymer is three-dimensionally interlocked with the hydrophobic polymer in a gel state.

In a space between a position of the discharge and a position where the membrane forming dope reaches a coagulation tank that contains the coagulating liquid, an idle running section may be provided (dry-wet spinning), or may not be provided (wet spinning).

Further, in order to further enhance the strength of the porous hollow fiber membrane, it is possible to arrange a reinforcement support inside the porous hollow fiber membrane. As the reinforcement support, a hollow braid woven by various fibers or a hollow fiber membrane may be used, and various materials may be individually used, or may be used in combination. As the fiber used in the hollow braid, a synthetic fiber, a semi-synthetic fiber, a regenerated fiber, a natural fiber or the like may be used, and the type of the fiber may be any one of monofilament, multi-filament or yarn.

The coagulating liquid used in the coagulation process should be a non-solvent of the hydrophobic polymer and a good solvent of the hydrophilic polymer, and includes water, ethanol, methanol or the like, or a mixture thereof, and particularly, a liquid mixture of the solvent used in the membrane forming dope and water is preferable in view of safety and operational management.

If the membrane forming dope is discharged to the coagulating liquid in this way, as the coagulating liquid diffuses in the membrane forming dope, the hydrophobic polymer and the hydrophilic polymer cause a phase separation, respectively. As the hydrophobic polymer and the hydrophilic polymer are coagulated while the phase separation occurs in this way, a porous hollow fiber membrane having a three-dimensional network structure in which the hydrophobic polymer and the hydrophilic polymer are interlaced with each other is obtained. When the phase separation stops, the procedure moves to the next process that is the hydrophilic polymer removal process.

<Hydrophilic polymer removal process>

The porous hollow fiber membrane formed by the above-described coagulation process generally has a large pore diameter and has potentially high water permeability. However, since a large amount of hydrophilic polymer that is in a solution state remains in the porous hollow fiber membrane, it may be difficult to achieve sufficient high water permeability in this state. Further, if the hydrophilic polymer is dried and hardened in the membrane, it causes a decrease in the mechanical strength of the membrane. Accordingly, after the coagulation process, the hydrophilic polymer removal process of removing the hydrophilic polymer that remains in the porous hollow fiber membrane is performed.

In the present embodiment, it is necessary to perform at least the de-pressurization washing process and the pressurization washing process to be described later as the hydrophilic polymer removal process. Here, (i) a washing process of a porous hollow fiber membrane, (ii) a molecular weight-reducing process of a hydrophilic polymer using an oxidizing agent, and (iii) a washing process of the hydrophilic polymer of which molecular weight is reduced as will be described later may be sequentially performed as a preparation processes beforehand.

Whether such a preparation process is performed may be appropriately determined according to the structure of the porous hollow fiber membrane. For example, in a case where the porous hollow fiber membrane has a multi-layered structure or its pore diameter is minute, it is preferable to perform the preparation processes of (i) to (iii), and it is more preferable to repeat the preparation processes two or more times as necessary in order to increase the effects of the subsequent de-pressurization washing process and the pressurization washing process.

(Preparation processes)

(i)Washing process of porous hollow fiber membrane

A washing liquid used in the washing process of the porous hollow fiber membrane is not particularly limited as long as it is a clean liquid in which the hydrophilic polymer is dispersed or dissolved, but water is preferable because its washing effect is high. Tap-water, industrial water, river water, well water or the like may be used as the water to be used, and an alcohol, an inorganic salt, an oxidizing agent, a surfactant or the like may be mixed therewith for use. Further, a mixed liquid of a good solvent of a hydrophobic polymer and water may be used as the washing liquid.

As a method of washing the porous hollow fiber membrane by the washing liquid, for example, a method of immersing the porous hollow fiber membrane in the washing liquid, a method of running the porous hollow fiber membrane through the washing tank in which the washing liquid is contained, or the like may be used.

A high washing temperature is suitable for suppressing the viscosity of the solution of the hydrophilic polymer to be low and preventing reduction in diffusion movement speed, and the washing temperature is preferably 50°C or greater, and more preferably 80°C or greater. Further, if the washing is performed while boiling the washing liquid, it is possible to scratch the outer surface of the porous hollow fiber membrane by bubbling generated due to boiling, to thereby perform an efficient washing.

The range of the washing temperature is preferably 50°C to 100°C, and more preferably 80°C to 100°C.

The hydrophilic polymer that remains in the porous hollow fiber membrane has a relatively low concentration by the washing process of the porous hollow fiber membrane. In the case of such low concentration, it is preferable to perform (ii) the molecular weight-reducing process of the hydrophilic polymer using the oxidizing agent in order to achieve a higher washing effect.

The solvent used in the membrane forming dope in addition to the hydrophilic polymer remains in the porous hollow fiber membrane formed by the coagulation process, but the solvent that remains in the porous hollow fiber membrane is removed by the washing process of the porous hollow fiber membrane.

(ii) Molecular weight-reducing process of hydrophilic polymer using oxidizing agent

As the molecular weight-reducing process of the hydrophilic polymer, a method of causing a chemical including an oxidizing agent to be retained in a porous hollow fiber membrane and then heating the porous hollow fiber membrane that retains the chemical in a vapor phase is preferably used.

Ozone, hydrogen peroxide, permanganate, dichromate, persulfate or the like may be used as the oxidizing agent, and hypochlorite is particularly preferable in view of strong oxidizability, excellent dispersibility, excellent operability and low cost. Sodium hypochlorite, calcium hypochlorite or the like may be used as the hypochlorite, but sodium hypochlorite is particularly preferable.

Here, the temperature of the chemical is preferably 50°C or lower, and more preferably 30°C or lower. If the temperature is higher than 50°C, oxidation decomposition is promoted during immersion of the porous hollow fiber membrane, and the hydrophilic polymer dropped in the chemical is further subject to oxidation decomposition. Thus, the oxidizing agent is wasted. On the other hand, if the temperature is excessively low, oxidation decomposition is suppressed, but compared with a case where oxidation decomposition is performed at a room temperature, cost for temperature control at a low temperature tends to increase. Accordingly, the temperature of the chemical is preferably 0°C or greater, and more preferably 10°C or greater.

The range of the temperature of the chemical is preferably 0°C to 50°C, and more preferably 10°C to 30°C.

After the chemical is retained in the porous hollow fiber membrane, the porous hollow fiber membrane is heated in the vapor phase, and thus, the hydrophilic polymer is oxidized and decomposed. According to the heating in the vapor phase, there is little possibility that the chemical retained in the porous hollow fiber membrane is excessively diluted or is eluted or dropped in a heating medium, and the oxidizing agent in the chemical is efficiently used for decomposition of the hydrophilic polymer that remains in the porous hollow fiber membrane, which is preferable.

As a specific heating method, it is preferable to heat the porous hollow fiber membrane using a heating fluid under atmospheric pressure. It is preferable to use a fluid with high relative humidity as the heating fluid, that is, to perform heating under a heat and humidity condition is preferable because it is possible to prevent drying of the oxidizing agent such as hypochlorite and to achieve efficient decomposition. Here, the relative humidity of the fluid is preferably 80% or greater, more preferably 90% or greater, and most preferably around 100%.

The range of the relative humidity is preferably 80% to 100%, and more preferably 90% to 100%.

The lower limit of the heating temperature is preferably set to 50°C because it is possible to reduce the processing time in a case where a continuous processing is performed, and is more preferably set to 80°C. The upper limit of the temperature is preferably set to 100°C in atmospheric pressure

The range of the heating temperature in atmospheric pressure is preferably 50°C to 100°C, and more preferably 80°C to 100°C.

(iii) Washing process of hydrophilic polymer of which molecular weight is reduced

As described above, after performing (ii) the molecular weight-reducing process of the hydrophilic polymer using the oxidizing agent, under the same condition as in (i) the washing process of the porous hollow fiber membrane as described above, it is preferable to again immerse the porous hollow fiber membrane in the washing liquid in order to wash and remove the hydrophilic polymer of which the molecular weight is reduced to some extent.

(De-pressurization washing process and pressurization washing process)

After performing the preparation processes as necessary as described above, the de-pressurization washing process and the pressurization washing process are performed for the porous hollow fiber membrane that sequentially passes through n (here, n is 2 or greater) washing tanks that contain the washing liquid.

The de-pressurization washing process is a process of de-pressurizing the washing liquid on the outer side of the porous hollow fiber membrane immersed in the washing liquid and forcing the washing liquid to pass from the inner side of the porous hollow fiber membrane to the outer side, and is a process of causing the pressure on the outer side of the porous hollow fiber membrane to be lower than the pressure on the inner side (hollow part) thereof and moving the hydrophilic polymer to the outer side of the porous hollow fiber membrane by the pressure difference at that time to remove the hydrophilic polymer.

On the other hand, the pressurization washing process is a process of pressurizing the washing liquid on the outer side of the porous hollow fiber membrane immersed in the washing liquid and supplying the washing liquid from the outer side of the porous hollow fiber membrane to the inner side thereof, and is a process of pressing the hydrophilic polymer into the porous hollow fiber membrane to the membrane hollow part while substituting or diluting the hydrophilic polymer in the porous hollow fiber membrane by the washing liquid. In addition, the pressurization washing process is a process of causing the pressure on the outer side of the porous hollow fiber membrane to be higher than the pressure on the inner side thereof and increasing the amount of the washing liquid that passes from the inner side to the outer side in the above-described de-pressurization washing process. Thus, the removal effect of the hydrophilic polymer is improved. By performing the de-pressurization washing process and the pressurization washing process, it is possible to effectively remove the hydrophilic polymer that remains after the preparation processes.

The de-pressurization washing process and the pressurization washing process are performed $m_2$ times in all (here, $m_2$ is an integer of 3 or greater), and at least the first and $m_2$-th processes are to the de-pressurization washing process.

Further, the pressurization washing process is performed for the porous hollow fiber membrane that passes through at least one of the first to (n-1)-th washing tanks.

Hereinafter, as an example of the specific method of the de-pressurization washing process and the pressurization washing process, a method using the washing device 1 of the present embodiment shown in FIG. 1 will be described. In the present embodiment, for example, in a case where the de-pressurization washing process and the pressurization washing process are performed three times in the order of the de-pressurization washing process, the pressurization washing process and the de-pressurization washing process, the de-pressurization washing process that is performed first is referred to as the first de-pressurization washing process, the pressurization washing process that is performed second is referred to as the second pressurization washing process, and the de-pressurization washing process that is performed third is referred to as the third de-pressurization washing process.

First, the flow passage member 23 of the first de-pressurization washing unit 20 and the flow passage member 33 of the pressurization washing unit 30 are immersed in the washing liquid L contained in the first washing tank 11. On the other hand, the flow passage member 43 of the second de-pressurization washing unit 40 is immersed in the washing liquid L contained in the second washing tank 12. Thus, the washing liquid L flows into the hollow fiber membrane running flow passages 21, 31 and 41 and the branch flow passages 22, 32 and 42 through the openings 21a and 21b, 31a and 31b, and 41a and 41b of the flow passage members 23, 33 and 43, and thus, the insides thereof are filled with the washing liquid L.

The porous hollow fiber membrane M passed through the coagulation process and the preparation processes as necessary continuously runs to sequentially pass through the insides of the hollow fiber membrane running flow passages 21, 31 and 41 filled with the washing liquid L.

The running speed of the porous hollow fiber membrane M is preferably 10 m/min to 100 m/min, and more preferably 20 m/min to 60 m/min.

If the porous hollow fiber membrane M is immersed in the first washing tank 11, the washing liquid L passes through the porous hollow fiber membrane M, and is introduced to the inner side of the porous hollow fiber membrane M. Then, in the first de-pressurization washing unit 20, the washing liquid L in the hollow fiber membrane running flow passage 21 is suctioned by the liquid suction means 24 through the branch flow passage 22 and the first pipe 24c, and thus, the pressure of the washing liquid L in the hollow fiber membrane running flow passage 21 is reduced. The pressure of the washing liquid L in the hollow fiber membrane running flow passage 21 is de-pressurized to be lower than at least the pressure inside the porous hollow fiber membrane M. Thus, the washing liquid L that passes through the porous hollow fiber membrane M and is introduced to the inner side of the porous hollow fiber membrane M passes through the porous hollow fiber membrane M again and is discharged to the outer side (first de-pressurization washing process). Consequently, the hydrophilic polymer that remains in the porous hollow fiber membrane M is removed from the branch flow passage 22 together with the washing liquid L.

Subsequently, in the pressurization washing unit 30, the washing liquid L in the first washing tank 11 is suctioned by the liquid push-in means 34, and the suctioned washing liquid L is pushed in through the branch flow passage 32 to increase the pressure of the washing liquid L in the hollow fiber membrane running flow passage 31. The pressure of the washing liquid L in the hollow fiber membrane running flow passage 31 is pressurized to be higher than at least the pressure inside the porous hollow fiber membrane M. Thus, the washing liquid L is supplied to the inner side from the outer side of the porous hollow fiber membrane M (second pressurization washing process). Then, the hydrophilic polymer in the porous hollow fiber membrane M is pressed into the membrane hollow part while being substituted or diluted by the washing liquid L. In addition, in the first de-pressurization washing unit 20 on the upstream side, the amount of the washing liquid that passes from the inner side of the porous hollow fiber membrane M to the outer side thereof is increased, and consequently, the removal effect of the hydrophilic polymer is enhanced.

The porous hollow fiber membrane M that passes through the first de-pressurization washing unit 20 and the pressurization washing unit 30 is extracted from the first washing tank 11 by the regulation means 60, and is subsequently introduced to the second washing tank 12.

If the porous hollow fiber membrane M is immersed in the second washing tank 12, the washing liquid L passes through the porous hollow fiber membrane M and is introduced to the inner side of the porous hollow fiber membrane M.

Then, in the second de-pressurization washing unit 40, the washing liquid L in the hollow fiber membrane running flow passage 41 is suctioned by the liquid suction means 44 through the branch flow passage 42 and the first pipe 44c, and thus, the pressure of the washing liquid L in the hollow fiber membrane running flow passage 41 is reduced. The pressure of the washing liquid L in the hollow fiber membrane running flow passage 41 is de-pressurized to be lower than at least the pressure inside the porous hollow fiber membrane M. Thus, the washing liquid L that passes through the porous hollow fiber membrane M and is introduced to the inner side of the porous hollow fiber membrane M passes through the porous hollow fiber membrane M again and is discharged to the outer side (third de-pressurization washing process). Consequently, the hydrophilic polymer pressed into the membrane hollow part by the pressurization washing unit 30 is removed together with the washing liquid L. Further, it is also possible to achieve a high removal effect, for example, with respect to a hydrophilic polymer attached to the wall surface of the porous part of the porous hollow fiber membrane M among the hydrophilic polymers that remain in the porous hollow fiber membrane M, and particularly, with respect to a hydrophilic polymer that is not easily removed.

When the de-pressurization washing process and the pressurization washing process are performed, the clean washing liquid is supplied to the second washing tank 12 from the supply means 50. Further, the washing liquid overflowed from the second washing tank 12 is discharged to the first washing tank 11 through the overflow pipe 12a. Further, the washing liquid overflowed from the first washing tank 11 is discharged to the outside of the system through the overflow pipe 11 a.

The pressure range of the pressurization washing process is preferably 0.01 MPa or greater and smaller than 1 MPa, is more preferably 0.05 MPa or greater and smaller than 0.5 MPa, and is most preferably 0.1 MPa or greater and smaller than 0.3 MPa. The pressure range of the de-pressurization washing process is preferably -0.1 MPa or greater and smaller than 0 MPa, is more preferably -0.09 MPa or greater and smaller than -0.03 MPa, and is most preferably -0.08 MPa or greater and smaller than -0.04 MPa.

<Drying process>

In a drying process, the porous hollow fiber membrane in which the hydrophilic polymer is removed is dried. A method of the drying process is not particularly limited, but a method of introducing the porous hollow fiber membrane to a dryer such as a hot air dryer may be used.

The present inventors found that the following relational expression (A) is established in a case where the following (1) to (4) are all satisfied.

(1) n washing tanks are provided, and one pressure-applying unit is provided in every washing tank.

(2) In each washing tank, the entire amount of the flowing-in washing liquid is overflowed to a front-stage (upstream) washing tank. The amount of the washing liquid supplied to the n-th washing tank for one minute and the amount of the washing liquid flowed out of the first washing tank for one minute are the same, and the amount is V(g) per minute.

(3) The amount of moisture that the membrane takes in in one minute in the first washing tank and the amount of moisture that the porous hollow fiber membrane gives out in one minute in the n-th washing tank are the same, and the amount is M(g) per minute.

(4) In the porous hollow fiber membrane introduced to the first washing tank, the concentration of membrane residual substances included in the porous hollow fiber membrane is $X_0$ (%), and the concentration of membrane residual substances included in the porous hollow fiber membrane extracted from the first washing tank is $X_1$ (%). Similarly, the concentration of membrane residual substances included in the porous hollow fiber membrane in the n-th washing tank is $X_{n-1}$ (%), and the concentration of membrane residual substances included in the porous hollow fiber membrane extracted from the n-th washing tank is $X_n$ (%).

[Expression 1]

$$M^n X_0 = \left( \sum_{i=0}^{n} (M^i V^{n-i}) \right) X_n \qquad \cdots (A)$$

Similarly, it was found that in a case where (1), (2'), (3) and (4) are all satisfied, the following relational expression (B) is established.

(2') The washing liquid of V(g) is individually supplied to each tank per minute.

[Expression 2]

$$M^n X_0 = (M+V)^n X_n \qquad \cdots (B)$$

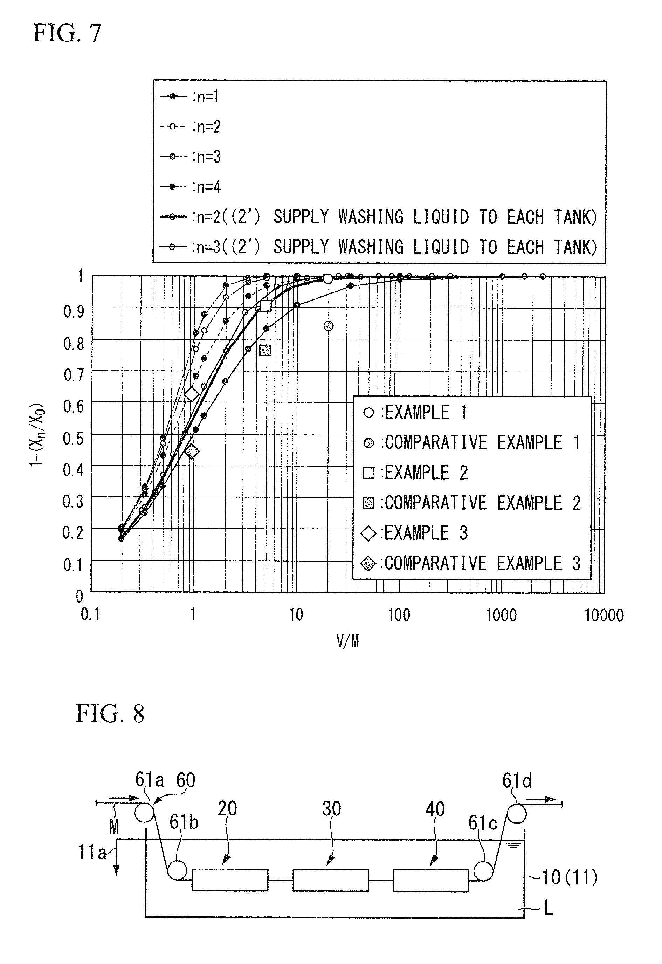

FIG. 7 is a graph illustrating the relationship between a washing liquid dilution ratio (V/M) when the number n of washing tanks is changed and a membrane residual substance removal ratio $(1-(X_n/X_0))$, with respect to the relational expressions (A) and (B).

In FIG. 7, "n=2 ((2') washing liquid is supplied to each tank)" and "n=3 ((2') washing liquid is supplied to each tank)" represent the result of the relational expression (B).

Further, in the case of the relational expression (B), since a fresh washing liquid is individually supplied to each tank, the supply amount of the entire washing liquid corresponds to the product of the supply amount of the relational expression (A) and the number of washing tanks. That is, in "n=2 ((2') washing liquid is supplied to each tank)" and "n=3 ((2') washing liquid is supplied to each tank)" in FIG. 7, the horizontal axis becomes n×V/M.

As is obvious from FIG. 7, it can be found that a curve that represents a characteristic of the membrane residual substance removal ratio with respect to the washing liquid dilution ratio matches well with a characteristic of the membrane residual substance removal ratio with respect to the washing liquid dilution ratio when the number of washing tanks and the washing liquid dilution ratio are changed in examples and comparative examples to be described later.

It can be understood from FIG. 7 that the membrane residual removal efficiency is excellent in a washing device in which the number of washing tanks is two or more, compared with a washing device in which the number of washing tanks is one.

The number n of washing tanks is preferably two or more, and more preferably three or more. The washing effect increases as the number of washing tanks increases, but the number n of washing tanks is preferably ten or less, more preferably eight or less, and most preferably six or less in terms of space limitation, cost or the like.

The range of the number n of washing tanks is preferably two or more and ten or less, more preferably three or more and eight or less, and most preferably three or more and six or less.

The washing liquid dilution ratio V/M represents a noticeable difference of removal efficiency of the membrane residual substances between a case where the number of washing tanks is two or more and a case where the number of washing tanks is one. The washing liquid dilution ratio V/M is preferably in a range of $0.5 \leq V/M \leq 100$, more preferably a range of $1 \leq V/M < 50$, and most preferably a range of $3 \leq V/M < 30$ with a membrane residual substance removal ratio of 90% or greater.

<Effects>

According to the method described above, in a case where the de-pressurization washing process and the pressurization washing process are performed three times in the order of the de-pressurization washing process, the pressurization washing process and the de-pressurization washing process in the hydrophilic polymer removal process, the third de-pressurization washing process is performed for the porous hollow fiber membrane that passes through the washing tank different from those in the first de-pressurization washing process and the second pressurization washing process. That is, the first de-pressurization washing process and the second pressurization washing process are performed for the porous hollow fiber membrane that passes through the first washing tank, and the third de-pressurization washing process is performed for the porous hollow fiber membrane that passes through the second washing tank. Here, most of the hydrophilic polymer that remains in the porous hollow fiber membrane is removed by the first de-pressurization washing process and the second pressurization washing process. Accordingly, since the porous hollow fiber membrane with a small amount of residual substances such as a hydrophilic polymer passes through the second washing tank, the washing liquid in the second washing tank is barely contaminated by the hydrophilic polymer. Further, the clean washing liquid is supplied to the second washing tank, and the overflowed washing liquid is discharged to the first washing tank. Thus, it is possible to wash the porous hollow fiber membrane by a relatively clean washing liquid in the third de-pressurization washing process, and thus, it is possible to suppress the hydrophilic polymer from being introduced to the porous hollow fiber membrane or from being attached to the surface of the porous hollow fiber membrane without using an excessive amount of washing liquid.

Accordingly, according to the porous hollow fiber membrane production method of the present embodiment, it is possible to reduce the concentration of residual substances in membrane retained water while suppressing the usage amount of the washing liquid, and to prevent reattachment of the hydrophilic polymer. In addition, since it is possible to supply the washing liquid discharged from the second washing tank to the first washing tank to be used again for washing in the first de-pressurization washing process and the second pressurization washing process, it is possible to reduce the usage amount of the washing liquid.

<Other embodiments>

The porous hollow fiber membrane production method of the invention is not limited to the above-described method.

For example, using the washing device 2 shown in FIG. 3 in the hydrophilic polymer removal process, the first de-pressurization washing process may be performed for the porous hollow fiber membrane M that passes through the first washing tank 11, the second pressurization washing process may be performed for the porous hollow fiber membrane M that passes through the second washing tank 12, and the third de-pressurization washing process may be performed for the porous hollow fiber membrane M that passes through the third washing tank 13.

Further, the pressurization washing process may be performed two or more times in the hydrophilic polymer removal process.

In a case where the pressurization washing process is performed two or more times, it is preferable to perform the pressurization washing process for the porous hollow fiber membrane that passes through at least the n-th washing tank, and it is preferable to perform the de-pressurization washing process for the porous hollow fiber membrane M that passes through the n-th washing tank after performing the pressurization washing process, as shown in FIGs. 4 to 6, for example.

As described above, the washing liquid in the first to (n-1)-th washing tanks is easily contaminated by the hydrophilic polymer removed from the porous hollow fiber membrane or the oxidizing agent. In the pressurization washing process, since the contaminated washing liquid is supplied to the inner side from the outer side of the porous hollow fiber membrane, the contaminated washing liquid may flow back to the n-th washing tank through the membrane, and in this case, there is a concern that the washing liquid in the n-th washing tank will also become contaminated.

However, if the pressurization washing process is also performed for the porous hollow fiber membrane M that passes through the n-th washing tank (the second washing tank 12 in the case of FIGs. 4 and 5, and the third washing tank 13 in the case of FIG. 6), it is possible to prevent the washing liquid that is supplied to the inner side of the porous hollow fiber membrane M by the final pressurization washing process from flowing back to the n-th washing tank, with respect to the porous hollow fiber membrane M that passes through the (n-1)-th washing tank (the first washing tank 11 in the case of FIGs. 4 and 5, and the second washing tank 12 in the case of FIG 6). Consequently, it is possible to effectively prevent the washing liquid in the n-th washing tank from being contaminated.

Further, in a case where the preparation processes are performed before the de-pressurization washing process and the pressurization washing process, there is a concern that the washing liquid will become contaminated due to the oxidizing agent.

However, if the pressurization washing process is also performed for the porous hollow fiber membrane M that passes through the n-th washing tank, it is possible to prevent the washing liquid from flowing back to the n-th washing tank. Accordingly, it is possible to prevent the washing liquid in the n-th washing tank from being contaminated, and to prevent members that form the n-th washing tank, and the pressurization washing unit and the second de-pressurization washing unit that are accommodated in the n-th washing tank from being corroded by the oxidizing agent. Here, since a large amount of oxidizing agent removed from the porous hollow fiber membrane is included in the washing liquid of the washing tank (particularly, the first washing tank) on the upstream side, it is preferable that members that form the washing tank on the upstream side, and the first de-pressurization washing unit and the pressurization washing unit that are accommodated in the washing tank on the upstream side be made of a material (for example, titanium or the like) having corrosion resistance.

In the above-described embodiment, the washing liquid is sequentially supplied to the washing tank on the upstream side from the washing tank on the downstream side so that the washing liquid overflowed from the n-th washing tank is supplied to the (n-1)-th washing tank, and the washing liquid overflowed from the (n-1)-th washing tank is supplied to the (n-2)-th washing tank, and is used again to wash of the porous hollow fiber membrane, but the invention is not limited thereto.

For example, the washing liquid overflowed from the n-th washing tank may not be supplied to the (n-1)-th washing tank, and may be discharged to the outside of the system. Further, a part of the washing liquid overflowed from the n-th washing tank may be supplied to the (n-1)-th washing tank, and the remaining washing liquid may be discharged to the outside of the system. Further, the clean washing liquid may also be supplied to the (n-1)-th washing tank. This is similarly applied to the washing liquid overflowed from the washing tank on the upstream side of the n-th washing tank. For example, the washing liquid overflowed from the (n-1)-th washing tank may be supplied to the (n-2)-th washing tank or may not be supplied thereto.

Further, in the above-described embodiment, when the de-pressurization washing process and the pressurization washing process are performed $m_2$ times in all, the first and $m_2$-th processes are the de-pressurization washing processes, but in the porous hollow fiber membrane production method of the invention, as long as at least the first and $m_2$-th processes are de-pressurization washing processes, the de-pressurization washing process may also be performed in the middle thereof.

The number of the de-pressurization washing process and the pressurization washing process is preferably three or more.

The washing in the invention is to remove a material other than a material that essentially forms the porous hollow fiber membrane by substituting at least a part of moisture retained in the porous hollow fiber membrane by the washing liquid on the outer side thereof, that is, a hydrophilic polymer that originates in the porous hollow fiber membrane production process, and for example, is used in the porous hollow fiber membrane production process, a material that is secondarily generated in the porous hollow fiber membrane production process, or the like.

The removal in the invention is to reduce the amount of a material, other than the material that essentially forms the porous hollow fiber membrane, that is retained in the porous hollow fiber membrane and is capable of being extracted from the porous part to 50% or less of the residual amount before washing, preferably to 30% or less, and more preferably to 10% or less.

The removal in the invention is to reduce the amount of a material, other than the material that essentially forms the porous membrane, that is retained in the porous hollow fiber membrane and is capable of being extracted from the porous part to 50% or less of the residual amount before washing, preferably to 30% or less, and more preferably to 10% or less.

Hereinafter, the invention will be described in detail referring to Examples, but the invention is not limited thereto.

[Example 1]

(Coagulation process)

A membrane forming dope (1) and a membrane forming dope (2) were prepared by mixing polyvinylidene fluoride A (product name: Kynar 301F, manufactured by ATOFINA JAPAN K.K), polyvinylidene fluoride B (product name: Kynar 9000LD, manufactured by ATOFINA JAPAN K.K), polyvinylpyrrolidone (product name: K-90, manufactured by ISP), and N,N-dimethylacetamide to have a mass ratio shown in Table 1.

Then, a nozzle (see FIG. 1 in JP-A-2005-42074) in which a hollow part is formed at the center and double annular discharge ports are sequentially formed on the outer side thereof to perform sequential coating of two types of liquids was prepared, a multi-filament single braid (multi-filament; 830T/96F, 16 punches) made of polyester was introduced to the hollow part as a porous base material in a state where the nozzle was kept at 30°C, and then, the membrane forming dope (2) and the membrane forming dope (1) were coated on the outer side thereof sequentially from the inside and were coagulated in a coagulating liquid (a mixed liquid of N,N-dimethylacetamide of 5 parts by mass and water of 95 parts by mass) that was kept at 80°C. In this way, a hollow fiber membrane in which one fraction layer is provided in the vicinity of the outer surface, and a porous layer of an inclined structure in which a pore diameter thereof increases toward the inside is coated on the braid was obtained. Among the coated membrane forming dopes (1) and (2), a main dope that forms a membrane structure of the hollow fiber membrane is the membrane forming dope (1) that is coated on the outer side.

Furthermore, a nozzle (see FIG. 1 in JP-A-2005-42074) in which a hollow part having an inner diameter larger than the outer diameter of the hollow fiber membrane is formed at the center thereof and double annular discharge ports are sequentially formed on the outer side thereof to perform sequential coating of two types of liquids was prepared, the hollow fiber membrane obtained as described above was introduced to the hollow part in a state where the nozzle was kept at 30°C, and then, glycerin (special grade manufactured by Wako Pure Chemical Industries, Ltd.) and the membrane forming dope (1) were coated on the outer side thereof sequentially from the inside and were coagulated in the same coagulating liquid as used above that was kept at 80°C. In this way, a porous hollow fiber membrane having a braided support of a double-layer structure in which a porous layer is further coated was obtained.

The spinning speed (running speed of the hollow fiber membrane) at that time was 8.8 m/min.

[Table 1]

| Composition | Membrane forming dope (1) | Membrane forming dope (2) |
|---|---|---|
| Polyvinylidene fluoride (A) | 12 | 3 |
| Polyvinylidene fluoride (B) | 8 | 2 |
| Polyvinylpyrrolidone | 10 | 2 |
| N,N-dimethylacetamide | 70 | 93 |
| Temperature of dope | 60°C | 50°C |
| Concentration of polyvinylidene fluoride in dope | 20% | 5% |

(Hydrophilic polymer removal process)

With respect to the porous hollow fiber membrane obtained in this way, the hydrophilic polymer removal process was performed in the following manner.

(1) Preparation processes

As the preparation processes, the following processes of (i) to (iii) were repeated two times.

(i) Hollow fiber membrane washing process

The porous hollow fiber membrane was immersed in a washing tank in which boiling water at 100°C was contained for 5 minutes for washing.

(ii) Molecular weight-reducing process of hydrophilic polymer using oxidizing agent

Then, the porous hollow fiber membrane was immersed in a water tank in which an aqueous solution of hypochlorite of a concentration of 60000 mg/L at a temperature of 30°C was contained for a retention time of 1 minute. Thereafter, the hollow fiber membrane was heated under the conditions of a temperature of 85°C, a relative humidity of 100% and a retention time of 3 minutes, to reduce the molecular weight of the hydrophilic polymer.

(iii) Washing process of hydrophilic polymer of which molecular weight is reduced

Next, the porous hollow fiber membrane was washed again under the same conditions as (i).

(2) De-pressurization washing process, pressurization washing process and de-pressurization washing process

As shown in FIG. 1, the washing tank 11 and the washing tank 12 in which water of a temperature of 70°C was contained as a washing liquid were prepared, and two hollow fiber membrane running flow passages 21 and 31 were arranged in series in the washing tank 11 at an interval. Further, one hollow fiber membrane running flow passage 41 was disposed in the washing tank 12. Further, the porous hollow fiber membrane M was sequentially introduced to the hollow fiber membrane running flow passage 21, 31 or 41 from the front-stage (upstream side), and the de-pressurization means (liquid suction means 24 or 44) was connected to the branch flow passage 22 of the hollow fiber membrane running flow passages 21 at the first-stage (on the side furthest upstream) among the three hollow fiber membrane running flow passages and the branch flow passage 42 of the hollow fiber membrane running flow passage 41 at the final stage (on the side furthest downstream). Then, de-pressurization was performed so that the gauge pressure of the de-pressurization means (liquid suction means 24) of the first de-pressurization washing unit was -0.05 MPa and the gauge pressure of the de-pressurization means (liquid suction means 44) of the second de-pressurization washing unit was -0.05 MPa, as shown in Table 2. Further, water at 70°C was supplied as a washing liquid from the liquid push-in means connected to the branch flow passage 32 of the hollow fiber membrane running flow passage 31 at the center among the three hollow fiber membrane running flow passages so that the gauge pressure was 0.3 MPa. The time for which the hollow fiber membrane M stayed in each of the hollow fiber membrane running flow passages 21, 31 and 41 was set to about 3 seconds.

The amount of moisture retained in the porous hollow fiber membrane M for one minute in the washing tank was measured, and it was 211.2 g/min.

Further, the amount of membrane residual substances included in the porous hollow fiber membrane M that was introduced to the washing tank 11 for 1 minute was 6.5 g/min.

4000 g of the washing liquid was supplied per minute from the end on the downstream side of the washing tank 12 in the running direction of the porous hollow fiber membrane M. Further, the entire washing liquid was overflowed into the washing tank 11 from the upstream side of the washing tank 12 in the running direction of the porous hollow fiber membrane M, and 4000 g of the washing liquid per minute was discharged from the upstream side of the washing tank 11 in the running direction of the porous hollow fiber membrane M.

The concentration of substances that remained in the washing liquid of the washing tank 12 and the removal ratio of membrane residual substances that were included in the membrane are shown in Table 3.

[Table 2]

| | First de-pressurization washing unit | Pressurization washing unit | Second de-pressurization washing unit |
|---|---|---|---|
| Pressure (MPa) | -0.05 | 0.3 | -0.05 |
| Length of washing unit (mm) | 400 | 400 | 400 |
| Temperature of water (°C) | 70 | 70 | 70 |

(Drying process)

After the hydrophilic polymer removal process, the porous hollow fiber membrane M passed through a drying process under the conditions of 95°C and 3 minutes.

The porous hollow fiber membrane having the braided support with the double-layer structure formed by the coagulation process, the hydrophilic polymer removal process and the drying process as described above had an outer diameter of 2.8 mm and an inner diameter of 1.0 mm.

(Measurement of the amount of remaining membrane residual substances)

The porous hollow fiber membrane was cut into a predetermined length, and was provided to N,N-dimethylacetamide to dissolve the porous hollow fiber membrane. Then, a solution from which the porous base material that is an insoluble component had been removed was evaporated to dryness and solidified on a glass plate, to thereby obtain a film having a thickness of about 20 $\mu$m. Then, by using the film as a sample, an absorbance spectrum was measured by an infrared spectrophotometer.

Further, when absorbance intensity due to C-F stretching vibration of polyvinylidene fluoride was set to 100%, the percentage of absorbance intensity of carbonyl group stretching vibration of polyvinylpyrrolidone was calculated from the ratio of these absorbance intensities, and the value (%) was set as the remaining amount of the remaining membrane residual substances (polyvinylpyrrolidone).

(Membrane residual substance removal ratio)

A numerical value obtained by subtracting the ratio $X_0/X_n$ of the membrane residual substances $X_0$ before being introduced to the washing tank and the membrane residual substances $X_n$ that flowed out of the n-th washing tank from 1 was defined as the membrane residual substance removal ratio.

(Measurement of concentration of membrane residual substances in washing liquid in washing tank)

The concentration of residual substances in a washing liquid in a washing tank was measured by an evaporation and drying-solidifying method that is generally used.

[Comparative example 1]

A porous hollow fiber membrane was produced by the same method as that of Example 1, except that only one washing tank 11 was used, the first de-pressurization washing unit 20, the pressurization washing unit 30 and the second de-pressurization washing unit 40 were arranged in the washing tank as shown in FIG. 8, 4000 g of a washing liquid per minute was supplied from the end of the washing tank 11 on the downstream side in the running direction of the porous hollow fiber membrane M, and 4000 g of a washing liquid per minute was discharged from the upstream side of the washing tank 11 in the running direction of the porous hollow fiber membrane M.

The concentration of residual substances in the washing liquid in the washing tank 11 and the removal ratio of the membrane residual substances included in the membrane are shown in Table 3.

Further, the outer diameter and the inner diameter of the obtained porous hollow fiber membrane were the same as in Example 1.

[Example 2]

A hollow fiber membrane was produced by the same method as in Example 1, except that the supply amount of the washing liquid was set to 1000 g/min.

[Example 3]

A hollow fiber membrane was produced by the same method as in Example 1, except that the supply amount of the washing liquid was set to 200 g/min.

[Comparative example 2]

A hollow membrane was produced by the same method as in Comparative example 1, except that the supply amount of the washing liquid was set to 1000 g/min.

[Comparative example 3]

A hollow membrane was produced by the same method as in Comparative example 1, except that the supply amount of the washing liquid was set to 200 g/min.

[Table 3]

| | First de-pressurization washing unit | Pressurization washing unit | Second de-pressurization washing unit | Washing liquid dilution ratio | Supply amount of washing liquid (g/min) | Membrane residual substance removal ratio | Concentration of residual substances in draining washing water (mg/L) |
|---|---|---|---|---|---|---|---|
| Example 1 | Washing tank 11 | | Washing tank 12 | 18.9 | 4000 | 0.99 | 12.2 |
| Comparative example 1 | Washing tank 11 | | | 18.9 | 4000 | 0.83 | 280 |
| Example 2 | Washing tank 11 | | Washing tank 12 | 4.7 | 1000 | 0.91 | 600 |
| Comparative example 2 | Washing tank 11 | | | 4.7 | 1000 | 0.77 | 1500 |
| Example 3 | Washing tank 11 | | Washing tank 12 | 0.9 | 200 | 0.63 | 12000 |
| Comparative example 3 | Washing tank 11 | | | 0.9 | 200 | 0.46 | 17500 |

As shown in Table 3, in a case where the same washing liquid dilution ratio was used in the hydrophilic polymer removal process, the concentration of residual substances in the washing liquid in the final-stage tank (washing tank on the side furthest downstream) was low and the membrane residual substance removal ratio was high in Examples in which two or more washing tanks were provided, compared with Comparative Examples in which one washing tank was provided. That is, a washing device including two or more washing tanks is capable of reducing the concentration of residual substances in membrane retained water while suppressing the usage amount of the washing liquid, compared with a washing device having only one washing tank.

Industrial Applicability

The washing device and the porous hollow fiber membrane production method according to the invention are capable of reducing the concentration of residual substances in membrane retained water while suppressing the usage amount of a washing liquid and preventing reattachment of a hydrophilic polymer, which have industrial applicability.

Reference Signs List

| 1, 2, 3, 4, 5 | Washing device |
| 10, 11, 12, 13 | Washing tank |
| 20, 40 | De-pressurization washing unit |
| 30 | Pressurization washing unit |
| 50 | Supply means |
| M | Porous hollow fiber membrane |
| L | Washing liquid |

**Claims**

1. A washing device for a porous hollow fiber membrane, comprising:

   n (n is an integer of 2 or greater) washing tanks that comprise a washing liquid, through which the porous hollow fiber membrane sequentially passes; and
   at least one pressure applying unit that pressurizes or de-pressurizes the washing liquid on the outer side of the porous hollow fiber membrane immersed in the washing liquid to force the washing liquid to pass through a membrane part of the porous hollow fiber membrane,
   wherein the pressure applying unit is accommodated in at least one of the first to (n-1)-th washing tanks.

2. The washing device for the porous hollow fiber membrane according to claim 1, wherein the pressure applying unit comprises:

   two or more de-pressurization washing units that de-pressurize the washing liquid on the outer side of the porous hollow fiber membrane immersed in the washing liquid to force the washing liquid to pass from the inner side of the porous hollow fiber membrane to the outer side thereof, and
   at least one pressurization washing unit that pressurizes the washing liquid on the outer side of the porous hollow fiber membrane immersed in the washing liquid to supply the washing liquid to the inner side of the porous hollow fiber membrane from the outer side thereof,
   wherein the de-pressurization washing units and the pressurization washing unit are arranged in series, and
   wherein the pressurization washing unit is accommodated in at least one of the first to (n-1)-th washing tanks.

3. The washing device for the porous hollow fiber membrane according to claim 1 or 2, further comprising:

   supply means used to supply the washing liquid to at least one of the second to n-th washing tanks.

4. The washing device for the porous hollow fiber membrane according to any one of claims 1 to 3, wherein the pressurization washing unit is further accommodated in the n-th washing tank.

5. The washing device for the porous hollow fiber membrane according to any one of claims 1 to 4,

wherein the de-pressurization washing units are disposed at opposite ends of an arrangement that comprises the de-pressurization washing units and the pressurization washing unit.

6. The washing device for the porous hollow fiber membrane according to any one of claims 2 to 5, wherein a pressure range of the pressurization washing unit is 0.01 MPa or greater and smaller than 1 MPa.

7. The washing device for the porous hollow fiber membrane according to any one of claims 2 to 6, wherein a pressure range of the de-pressurization washing units is -0.1 MPa or greater and smaller than 0 MPa.

8. A porous hollow fiber membrane production method comprising:

a coagulation process of coagulating a membrane forming dope that comprises a hydrophobic polymer and a hydrophilic polymer in a coagulating liquid to form a porous hollow fiber membrane; and
a hydrophilic polymer removal process of washing the porous hollow fiber membrane to remove the hydrophilic polymer that remains in the porous hollow fiber membrane,
wherein the hydrophilic polymer removal process comprises at least one pressure washing process of pressurizing or de-pressurizing, with respect to the porous hollow fiber membrane that sequentially passes through the insides of n (n is an integer of 2 or greater) washing tanks that comprise a washing liquid, the washing liquid on the outer side of the porous hollow fiber membrane to force the washing liquid to pass through a stem of the porous hollow fiber membrane,
wherein the pressure washing process is performed $m_1$ ($m_1$ is an integer of 1 or greater) times in all, and
wherein the pressure washing process is performed for the porous hollow fiber membrane that passes through at least one of at least the first to (n-1)-th washing tanks.

9. The porous hollow fiber membrane production method according to claim 8, wherein with respect to the porous hollow fiber membrane that sequentially passes through the insides of the n (n is an integer of 2 or greater) washing tanks that comprise the washing liquid, the pressure washing process comprises:

a de-pressurization washing process of de-pressurizing the washing liquid on the outer side of the porous hollow fiber membrane to force the washing liquid to pass from the inner side of the porous hollow fiber membrane to the outer side thereof, and
a pressurization washing process of pressurizing the washing liquid on the outer side of the porous hollow fiber membrane to supply the washing liquid to the inner side of the porous hollow fiber membrane from the outer side thereof,
wherein the de-pressurization washing process and the pressurization washing process are performed $m_2$ ($m_2$ is an integer of 3 or greater) times in all, and
wherein the pressurization washing process is performed for the porous hollow fiber membrane that passes through at least one of at least the first to (n-1)-th washing tanks.

10. The porous hollow fiber membrane production method according to claim 8 or 9, further comprising:

supplying the washing liquid to at least one of the second to n-th washing tanks.

11. The porous hollow fiber membrane production method according to any one of claims 8 to 10, further comprising:

performing the pressurization washing process for the porous hollow fiber membrane that passes through the n-th washing tank.

12. The porous hollow fiber membrane production method according to any one of claims 8 to 11, wherein at least the first and $m_2$-th processes are the de-pressurization washing processes.

13. The porous hollow fiber membrane production method according to any one of claims 8 to 12, wherein the pressurization washing process comprises pressurizing in a pressure range that is 0.01 MPa or greater and smaller than 1 MPa.

14. The porous hollow fiber membrane production method according to any one of claims 8 to 13, wherein the de-pressurization washing process comprises de-pressurizing in a pressure range that is -0.1 MPa or greater and smaller than 0 MPa.

FIG. 1

# FIG. 2

FIG. 3

FIG. 4

EP 2 674 210 A1

FIG. 5

EP 2 674 210 A1

FIG. 6

FIG. 7

FIG. 8

**INTERNATIONAL SEARCH REPORT**

| | International application No. |
|---|---|
| | PCT/JP2012/052740 |

A. CLASSIFICATION OF SUBJECT MATTER
*B01D65/02*(2006.01)i, *B01D69/08*(2006.01)i

According to International Patent Classification (IPC) or to both national classification and IPC

B. FIELDS SEARCHED

Minimum documentation searched (classification system followed by classification symbols)
B01D61/00-71/82, C02F1/44, A61M1/18, D01D5/24

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho  1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-161755 A  (Mitsubishi Rayon Co., Ltd.), 17 July 2008 (17.07.2008), claims 1, 4, 5; paragraph [0033]; fig. 7 (Family: none) | 1-14 |
| A | JP 2008-207050 A  (Toray Industries, Inc.), 11 September 2008 (11.09.2008), fig. 1, 4 (Family: none) | 1-14 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 23 April, 2012 (23.04.12) | Date of mailing of the international search report 01 May, 2012 (01.05.12) |
|---|---|
| Name and mailing address of the ISA/ Japanese Patent Office | Authorized officer |
| Facsimile No. | Telephone No. |

Form PCT/ISA/210 (second sheet) (July 2009)

## REFERENCES CITED IN THE DESCRIPTION

**Patent documents cited in the description**

- JP 2011024028 A
- JP 2008161755 A
- JP 2005042074 A